# EUROPEAN PATENT SPECIFICATION

(11) **EP 3 100 019 B1**
(45) Date of publication and mention of the grant of the patent: **14.11.2018**
(21) Application number: 15708310.6
(22) Date of filing: 29.01.2015
(51) Int. Cl.: G01L 15/00, G01L 21/34, G01L 9/00, G01L 19/00

(54) **MINIATURIZED DEVICE FOR MEASUREMENTS OF PRESSURE OVER A VERY WIDE RANGE, OF GAS CONCENTRATIONS AND RESIDUAL GAS ANALYSIS**
MINIATURISIERTES GERÄT ZUR MESSUNG VON DRUCK ÜBER EIN SEHR BREITES SPEKTRUM VON GASKONZENTRATIONEN UND RESTGASANALYSE
DISPOSITIF MINIATURISÉ POUR MESURES DE PRESSION SUR UNE GAMME TRÈS LARGE DES CONCENTRATIONS DE GAZ ET DE ANALYSE DES RÉSIDUS DE GAZ

(30) Priority: 31.01.2014 IT MI20140137
(43) Date of publication of application: 07.12.2016
(73) Proprietor: Nanotech Analysis S.r.l., 10128 Torino (IT)
(72) Inventor: MENSA, Gianpiero, I-10128 Torino (IT)
(74) Representative: Brunazzi, Stefano
(86) International application number: PCT/IB2015/050679
(87) International publication number: WO 2015/114558

(56) References cited:
- EP-A1- 2 309 241
- DE-A1- 19 853 035
- US-A- 5 440 931
- US-A1- 2007 012 116
- US-A1- 2010 024 517
- US-B1- 6 452 167

## Description

### TECHNOLOGICAL BACKGROUND OF THE INVENTION

### Field of Application.

The present invention relates to the field of pressure sensor devices, particularly miniaturized sensor devices, for use to measure pressures and to measure partial pressures and gas concentrations over a very wide range of values (from high vacuum condition to very high pressure conditions).

### Description of the Prior Art.

In the field of sensors, pressure sensor devices play an increasingly important role, which find a wide and growing field of use, especially in industrial applications, within production machines or plants or manufacturing environments or systems for analysis and measurement, for example to manage the fluid-dynamics of a whole system.

In these applications, it may be necessary to measure the pressure with high precision, in many different points, in often unfavorable environmental conditions, thus resulting in critical, or even extreme, operating conditions for the devices. Moreover, the pressure conditions to which the devices can be subjected, and which they have to detect, can vary within a very wide range, from very low pressures typical of high vacuum (for example, 10⁻¹³ mbar) to very high pressures (for example, 10⁴ mbar).

There is also a need to carry out measurements of partial pressures and/or concentrations, i.e., a Gas Analysis or "Residual Gas Analysis", together with pressure measurements, under both vacuum or Ultra-High Vacuum (UHV) conditions and higher pressure conditions. It is apparent that the fact of being able to carry out these functions by means of a same device for pressure measurement over a very wide range would be very advantageous.

To the Applicant's knowledge, there are not known devices that are suitable to fulfill the above-mentioned need, i.e., that are capable to carry out both pressure measurements over a very wide range and complete analyses such as Gas Analysis or Residual Gas Analysis (RGA), in all the measurable pressure conditions.

Particularly, with reference to RGA, the known techniques of mass spectrometry are not directly applicable in conditions other than vacuum or high vacuum.

Moreover, even making reference to pressure measurements only, individual devices suitable to form a single integrated device capable to operate over a very wide range of pressures, as it would be desirable, are also not known.

The existing sensor devices are capable to operate, at the most, over very narrow sub-ranges, with respect to the above-mentioned range.

For example, for pressures that are not very low, and considering only high performance, i.e., "high end", devices, capacitive diaphragm pressure sensors are known, which, depending on design parameters, can measure pressures within different sub-ranges, that are however subsets of the range from 10⁻⁴ mbar to 10³ mbar. In order to cover this range, a sensor system comprising multiple individual devices must be used: for example, at least three capacitive pressure sensors in parallel may be required. However, there are no known individual devices able to measure a pressure over the whole range from 10⁻⁴ mbar to 10³ mbar and, in addition, no commercial instruments are known, which are capable to measure pressures up to 10⁴ mbar (that is, over-pressures up to ten times the atmospheric pressure).

On the other side, for pressures less than 10⁻⁴ mbar, further devices are to be used, based on a totally different, rather sophisticated and complex concept, usually called "vacuum gauges".

Known vacuum gauges are mainly of two types: "Hot Cathode Ionization Gauge" (e.g., of the Bayard-Alpert type) and "Cold Cathode Ionization Gauge" (e.g., Penning gauge and Inverted Magnetron IMG, which ionize the residual gas by means of a glow and/or plasma discharge). For example, the "Bayard-Alpert" vacuum gauges are substantially based on an emission of electrons, which ionize the gas particles that are present, and on the subsequent detection of the obtained ions, the number of which depends on the concentration of the gas particles, and thus on the pressure.

These devices, in turn, must be inserted into a complex sensor system, in parallel to the capacitive pressure sensor, if the range of detectable pressures requires to be extended to low values.

In any case, the minimum pressure values that are measurable by using known types of vacuum gauges can hardly reach pressure values below 10⁻¹⁰ or 10⁻¹¹ mbar, at most.

This is due to inherent constraints of the physic phenomena involved in the detection, particularly to the generation of X-rays that inevitably occurs when ionizing electrons impact on grids for ion extraction/detection. These X-rays, by also colliding on the ion detectors, generate spurious signals that totally distort the detection results (detected ions), when pressures are very low.

In some further known solution, attempts have been made to replace, in "hot-cathode" devices, the standard filaments with field-effect electrons sources (for example nanotubes, micro-tips, etc.). However, in such solutions, both the electronic current density, thus the generated ionic signal, and the electron recombination rate, thus the generated X-rays, result to be increased in a comparable manner. Therefore, these solutions do not offer substantial improvements in terms of sensitivity and signal-to-noise ratio.

Therefore, for pressures in the order of 10⁻¹² - 10⁻¹³ mbar, it can be even said that there are no known miniaturized devices, of a standard type, that are capable of measuring such pressures levels.

Even considering only those pressure ranges that are measurable by using the known devices, it has been shown above that only a complex and cumbersome system, comprising multiple single devices in parallel, can perform pressure measurements over a wide range.

The drawback of complexity, which causes the further disadvantages of high costs and low reliability, is worsened by the fact that each single device, in order to be able to work, in addition to the sensor itself, requires "macroscopic" electronic components: for example, signal processing or elaboration modules, interface modules, either wired or wireless, towards higher-level controllers, etc.

Moreover, the fact of using very structured sensor systems implies a tendency to decrease reliability and increases the requirements for initial calibration, diagnostic, and possibly recalibration procedures.

Such procedures must be performed *ad hoc* for each individual device sensor over a narrow range, and moreover, generally, by extracting each device from the system and proceeding with diagnostics and recalibration outside the instrument/environment where they are normally installed, i.e., off-line.

In summary, it is thus noted that there is a need to have a pressure sensor device which is, even when considered individually, as "universal" as possible, both in the sense of being able to measure a pressure over a very wide range (for example 10⁻¹³ - 10⁴ mbar) and in the sense of enabling Gas Analysis or Residual Gas Analysis functions over the whole pressure range.

There is also a need to make this device as miniaturized as possible, while still maintaining a high measurement precision at any pressure level, within the above-mentioned range.

In addition, there is a need that this device is as "self-contained" as possible, in terms of calibration and diagnostics.

None of the above-mentioned known devices is able to fulfill the single needs illustrated above, and least of all the combination of these needs.

The possibility of having a "universal" miniaturized and self-contained pressure sensor device appears a really challenging objective, considering that the various needs can result in conflicting design requirements, which are very difficult to fulfill altogether.

In light of the above, the object of the present invention is to devise and provide a miniaturized device for pressure measurements over a very wide range and for measurements of gas concentration and Gas Analysis or Residual Gas Analysis (and related methods), that results to be improved such as to fulfil the above-mentioned needs, and able to at least partially overcome the drawbacks described above with reference to the prior art.

The U.S. Patent Application US 2010/024517 A1 describes a pressure gauge designed to measure pressure over a wide range of pressures.

The U.S. Patent Application US 2007/012116 A1 describes a wide-range combination vacuum gauge apparatus.

### SUMMARY OF THE INVENTION.

This object is achieved by a device according to claim 1.

Further embodiments of such device are defined in the dependent claim 2 to 12.

A method for measuring pressure and gas concentration, over a very wide range, carried out by the device of the invention, is defined in claim 13.

### BRIEF DESCRIPTION OF THE DRAWINGS.

Further characteristics and advantages of a miniaturized device for pressure and concentration measurements over a very wide range, and of Residual Gas Analysis, according to the present invention, will result from the following description of preferred embodiments given by way of indicative but not limitative examples, with reference to the attached figures, in which:
- Fig. 1 illustrates a simplified functional diagram of a device, according to the invention;
- Fig. 2 illustrates an exemplary structural diagram of the device according to the invention;
- Fig. 3 illustrates a diagram of an embodiment of a device according to the invention;
- Fig. 4 is another implementation example of the device of Fig. 2;
- Fig. 5 illustrates a mode of ion extraction provided in one embodiment of the device.

### DETAILED DESCRIPTION.

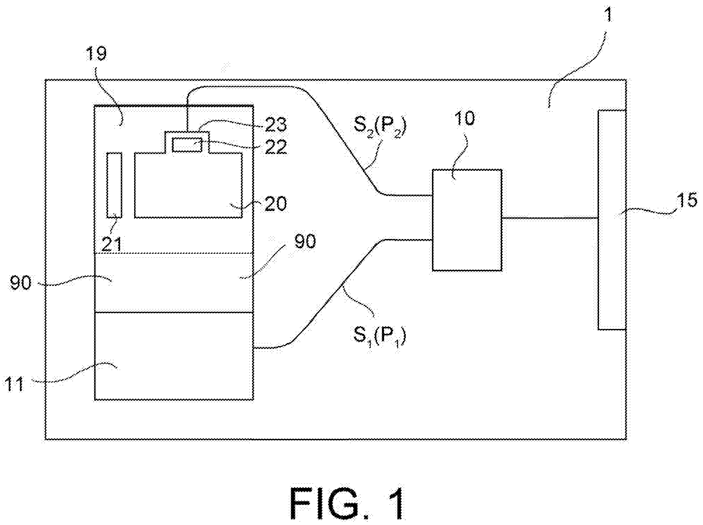

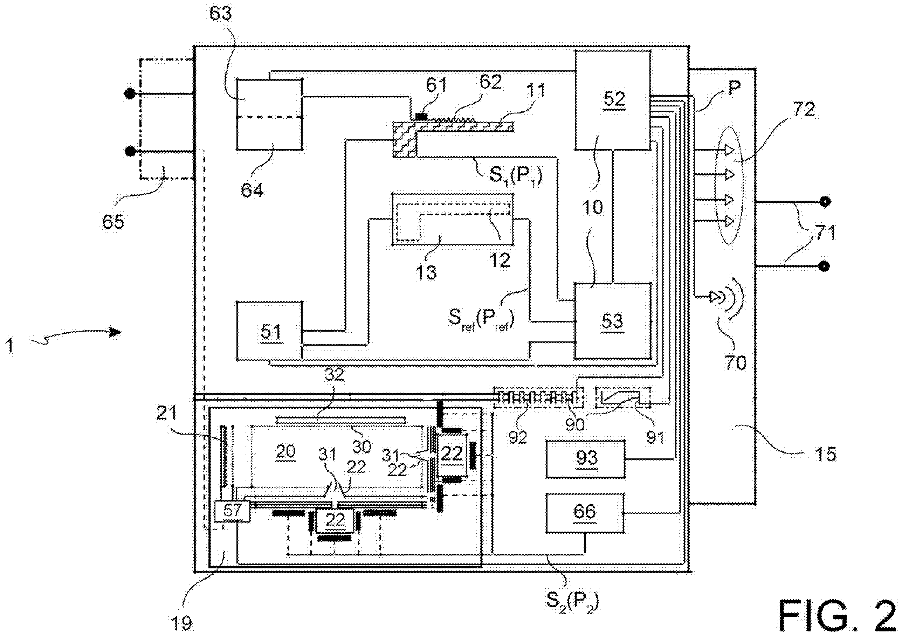

With reference to the figures, particularly to Figs. 1 and 2, a miniaturized device 1 for pressure and gas concentration measurements, over a very wide range, and for Residual Gas Analysis measurements is described.

The device 1 comprises at least one first electro-mechanical miniaturized pressure sensor member 11, configured to detect a first pressure value P₁ and to generate a first electrical signal S₁ representative of the above-mentioned first pressure value P₁.

The device 1 further comprises an ionization-based detection member 19, configured to detect a second pressure value P₂ and to generate a second electrical signal S₂ representative of the above - mentioned second pressure value P₂. The ionization - based

detection member 19 comprises, in turn, at least one ionization source 21, an ionization region 20, ion extraction means 22 and at least one ion detector 23, configured to detect ions and generate the above-mentioned second electrical signal S₂, depending on the amount of detected ions and representative of the second pressure value P₂.

The device 1 further comprises controlled flow opening/closing means 90, which are configured to control a fluidic communication between the ionization-based detection member 19 and an environment in which the first sensor member 11 is located.

In the device 1, electronic processing means 10 are also included, which are operatively connected to the first sensor member 11 and to the ionization-based detection member 19; the electronic processing means 10 are configured to determine a measured pressure value P based on the above-mentioned first electrical signal S₁ and second electrical signal S₂; the electronic processing means 10 are also operatively connected to the controlled flow opening/closing means 90 and are further configured to control the condition thereof.

Finally, the device 1 comprises interface means 15, operatively connected to the electronic processing means 10, configured to provide in output the measured pressure value P.

The first sensor member 11, the ionization-based detection member 19, the controlled flow opening/closing means 90, the electronic processing means 10 and the interface means 15 are all comprised in a single integrated device.

It should be noted that as "integrated device" is meant herein a device that is manufactured by means of integrated micro/nano-electronic techniques and that is contained, or containable, in a single, individual package.

According to a preferred exemplary implementation, the device 1 is an integrated device made by means of a single chip, for example made of silicon. In this case, the first sensor member 11, the ionization-based detection member 19, the controlled flow opening/closing means 90, the electronic processing means 10 and the interface means 15 are included (i.e., integrated) in the single chip of the integrated device 1.

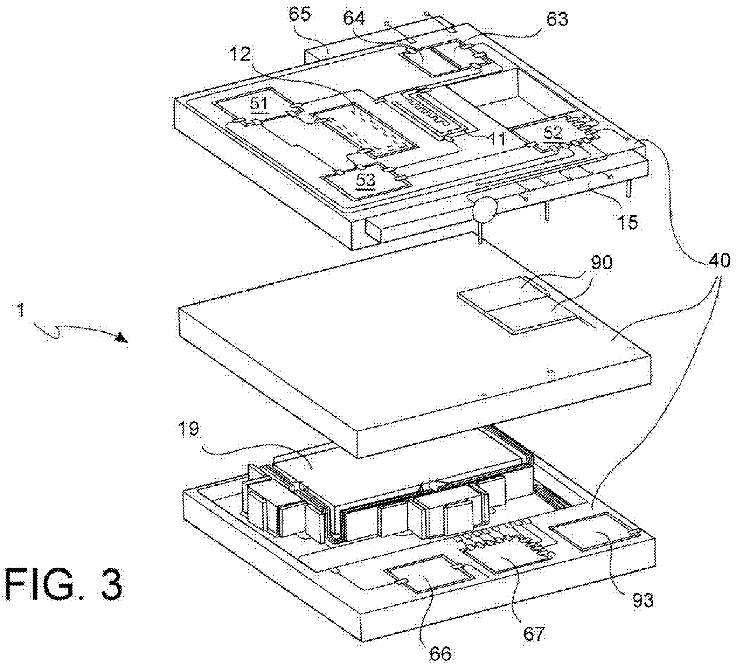

According to a different example, also included in the invention, the device 1 comprises two half-chips, or a multi-layer chip 40 (shown for example in the exploded view in Fig. 3) which are connected to each other also at a microscopic level.

In other exemplary embodiments, the device 1 may comprise multiple chips connected each other at a microscopic level, such as to still obtain an integrated device having the proprieties described above.

On the basis of the above, the definition of "miniaturized device" can be also understood, i.e., a device which, by being integrated, has a size in the micrometric scale, for example of an overall order of magnitude of hundreds of µm² or of mm², which size is still lower than the minimum size that can be handled and operated, wherein such minimum size is obtained by providing the device with a suitable packaging.

It should be further noted that such a miniaturization not only concerns the actual sensor members (which allows the measurement range to be extended) but also the further processing and interface members belonging to the device (which contributes to improve the signal-to-noise ratio).

According to an exemplary implementation, related to a situation where the range of measurable pressures is split into two measurement sub-ranges, the electronic processing means 10 of the device 1 are configured to generate the measured pressure value P as coincident with the first P₁ or the second P₂ detected pressure values (thus, based on the first or second electrical signals, S₁ or S₂, respectively), depending on the fact that the pressure to be measured belongs to one or the other one of the measurement sub-ranges.

In an implementation option, the electronic processing means 10 are configured to automatically detect the measurement sub-range, based on a sequential activation of the device 1 starting from the first sensor member 11. Therefore, according to this option, the device can be operated in any environment, at any pressure level from 10⁻¹³ mbar to 10⁴ mbar. Upon activation, the processing means 10 activate the first electro-mechanical sensor member 11, which is able to operate over an operating range comprising the first sub-range (for example, from 10⁻⁴ mbar to 10⁴ mbar), while the controlled flow opening/closing means 90 are in a condition wherein they seal and insulate the ionization-based detection member 19 from the environment. If this first sensor member 11 generates a meaningful result (i.e., a valid value of Pi), this reveals that the environment pressure is within the first pressure sub-range, and the detected value P₁ is outputted as the result of measured pressure P. Instead, if the first sensor member 11 does not generate a meaningful result, this reveals that the environment pressure is within the second pressure sub-range. In this case, the electronic processing means 10 activate the controlled flow opening/closing means 90 to allow direct fluidic communication between the first sensor member 11 and the detection member 19, thus equalizing the pressures to which they are subjected. The electronic processing means 10 then activate the ionization-based detection member 19 (as will be described below) and the value P₂ detected from the latter is outputted as result of measured pressure P.

The characteristic and the methodology described above allow using the device 1 as an almost universal pressure sensor.

According to an exemplary embodiment of the device 1, shown for example in the exploded view of figure 3, each of said first sensor member 11, ionization-based detection member 19 and controlled flow opening/closing means 90 extends along two directions.

Moreover, the controlled flow opening/closing means 90 are configured to control a fluidic communication between the ionization-based detection member 19 and the first sensor member 11.

In this case, the first sensor member 11, the ionization-based detection member 19 and the controlled flow opening/closing means 90 can be overlaid in the third direction perpendicular to the first two, in such a way that, considering such third direction, the controlled flow opening/closing means 90 are interposed between the first sensor member 11 and the ionization-based detection member 19.

According to an embodiment option, the controlled flow opening/closing means 90 can take, in a controlled manner, one of the following conditions: a closed condition, wherein they seal and insulate the ionization-based detection member 19 from the environment to which the first sensor member 11 is exposed; a micro-fluidic opening condition, wherein they inhibit a macro-fluidic communication but allow a micro-fluidic communication between the two above-mentioned members; and moreover a macro-fluidic opening condition, wherein they allow a macro-fluidic communication between the above-mentioned members, which thus are brought at a same pressure.

According to an embodiment, the device 1 further comprises a miniaturized pumping member 93 (or pump 93) configured to pump gas from the ionization-based detection member 19, such as to keep, when it is turned on under the control of the processing means 10,a pressure gradient.

In several possible implementation examples, the miniaturized pumping member 93 is of the "ionic pump" type or of the "getter" type, i.e., capable of carrying out a chemical pumping that does not evacuate outwardly; or a miniaturized pumping member 93, configured to evacuate outwardly.

In another implementation example, usable in a context where the device is employed in an environment being at a pressure lower than the one desired in the detection member 19, the miniaturized pumping member 93 may simply comprise a micro-valve with controlled opening/closing, facing the above-mentioned environment at lower pressure.

According to a preferred implementation option, the controlled flow opening/closing means 90 comprise at least one valve 91 and further comprise a micro-fluidic communication layer 92.

The valve 91 is configured to either allow or inhibit, when it is respectively opened or closed in a controlled manner, a macro-fluidic communication between the first sensor member 11 and the ionization-based detection member 19.

The micro-fluidic communication layer 92 comprises nano-pores, that can be either opened or closed in a controlled manner, suitable to allow or not respective gas micro-flows to pass through. Therefore, the micro-fluidic communication layer 92 is configured to put the first sensor member 11 and the ionization-based detection member 19 in micro-fluidic communication, in a selective and controlled way, when the valve 91 is in a closed state, and when the miniaturized pumping member 93 is active, such as to make uniform the gas concentration, between the first sensor member 11 and the ionization-based detection member 19, while keeping a different pressure therebetween.

Thus, in the exemplary embodiment shown above, when the valve 91 is opened (and the pumping is turned off) the sensor member 11 and the detection member 19 are at the same pressure, and the controlled flow opening/closing means 90 are in a macro-fluidic opening condition; when the valve 91 is closed, the nano-pores of the micro-fluidic communication layer 92 are opened and the pumping is active, the controlled flow opening/closing means 90 are in a micro-fluidic opening condition; when the valve 91 is closed and also the nano-pores of the micro-fluidic communication 92 layer are closed, the detection member 19 is sealed and isolated from the sensor member 11, and the controlled flow opening/closing means 90 are in a closing condition (while the pumping can be either active or not).

The structural and functional characteristics described above allow the device to operate in a very versatile and flexible way.

An exemplary, non-limiting, operating mode is disclosed herein below.

When the device 1 is in vacuum or high vacuum condition, the valve 91 of the controlled flow opening/closing means 90 may be opened. The ionization-based detection member 19 operates in its normal conditions, and it can perform both total pressure measurements and (as it will be better detailed in the following) partial pressure measurements for RGA functions.

When the device 1 is not in vacuum or high vacuum condition (or anyway it is outside the operating range of the detection member 19), the valve 91 of the controlled flow opening/closing means 90 is closed, and thus separates the environments in which there are the sensor member 11 (suitable, in this case, to measure the total pressure, which is in its operating range) and the ionization detection member 19 (kept in its operating conditions of low/very low pressure, with pumping activated).

In this case, however, the nano-pores of the micro-fluidic communication means 92 can be conveniently opened, such as to allow micro-flows of particles to enter the ionization detection member 19. These particles flow in a "molecular regime" through the nano-pores, due to the very small dimension of the latter, and replicate, in the ionization region 20 of the ionization detection member 19, the same gas concentration as present in the environment (to which the electro-mechanical pressure sensor 11 is also subjected), but at a much lower pressure, at which the ionization detection member 19 can operate.

In order to maintain the desired pressure in the detection member 19, the pumping of the gas particles from the ionization region takes place for example through millimetric holes (not nano-pores) which anyway, by opening on a very low pressure environment, allow the micro-flows of gas to exit, even in this case in a "molecular regime", in equilibrium conditions with the input micro-flows.

In such a way, the device allows a measurement of concentrations or Gas Analysis even in environmental pressure conditions other than vacuum.

In other terms, the device advantageously allows sampling gas mixtures at atmospheric pressures, or higher, then analyzing them at low pressures, while keeping the concentrations constant.

According to one embodiment, the device 1 also comprises at least one second electro-mechanical miniaturized pressure sensor member 12 (which will be herein also called reference sensor 12) arranged inside a respective casing 13, suitable to seal the second sensor member 12 and configured to detect a third pressure value P_{ref}, having a function of reference pressure value, and to generate a reference electrical signal S_{ref}, representative of the reference pressure value P_{ref}. As it will be shown below, such second sensor member 12 plays an important role in improving the measurement precision of the device and in enabling self-calibration and self-diagnostics procedures.

The first 11 and second 12 miniaturized sensor members are now considered in greater detail.

Each of miniaturized sensor members can be made, in principle, by using any electro-mechanical transducer, capable to provide an electrical variable representative of the detected pressure.

Particularly, the first 11 and second 12 sensor members are configured to have a mechanical or electro-mechanical behaviour correlated to a first and a second mechanical or electro-mechanical variable (for example, position, or movement, or oscillation), respectively, depending on the pressure (Pi, P_{ref}) or on the fluid-dynamics to which the sensor member is respectively subjected.

Moreover, the first 11 and second 12 sensor members are further configured to either generate or transform the above-mentioned first electrical signal S₁ and reference electrical signal S_{ref} (representative of the first pressure value P₁ and the reference pressure value P_{ref}, respectively) based on the respective first and second mechanical or electro-mechanical variables sensible to pressure or to fluid-dynamics.

For example, the amplitude or resonance frequency or width of the spectrum peak or other electrical variables of the electrical signals S₁ and S_{ref} can be correlated and can represent (according to *per*-*se* known theoretical perspectives) a pressure value detected by the respective sensor member.

It should be noted that the two sensor members, in a preferred exemplary embodiment, are identical, and are designed to behave in the same way, based on the same principles and on the same variables.

In other exemplary embodiments, the two sensor members can also differ from each other, as long as the correlation of their behaviours is precisely known, such as to allow to define a "nominal behaviour" and, as it will be better explained herein below, to identify possible deviations of the first sensor member 11 from that "nominal behaviour".

According to a preferred exemplary embodiment, the first 11 and second 12 sensor members are similar to each other, and each of them comprises a respective oscillating member of the MEMS/NEMS (Micro/Nano-Electro-Mechanical System) type.

Particularly, according to an implementation option, such MEMS/NEMS oscillating member comprises a micro-cantilever configured to oscillate with a dynamic response depending on the pressure to which it is subjected.

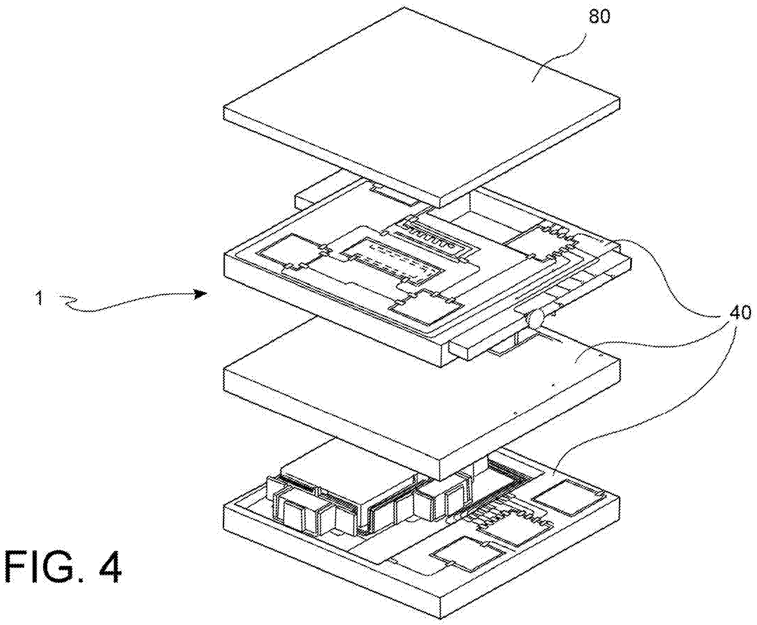

Therefore, in Figs. 2-4, a first micro-cantilever, that is the first sensor member, is designated as 11, while a second micro-cantilever, that is the second sensor members is designated as 12; the second micro-cantilever is illustrated in a dashed line, because it is actually covered by the casing 13, in the illustrated views.

The micro-cantilever operating principle provides that the characterizing electro-mechanical variable is an oscillation: the micro-cantilever oscillates with a damping factor α depending on the pressure to which it is subjected. Therefore, it is able to generate an electrical signal (i.e. S₁ or S_{ref}) whose dynamic response is representative of the pressure to which the micro-cantilever is subjected. Typically, the damping factor α is in inversely proportional to the (miniaturized) thickness d of the micro-cantilever. Therefore, the miniaturization of the micro-cantilever (and, generally speaking, of the sensor member) is one of the aspects that contribute to make the range of pressure values, measurable by the important device of the invention, especially wide.

According to an implementation option, each of the two micro-cantilevers 11, 12, is excited by applying a forcing waveform having a known frequency. The dynamic response and, accordingly, the related typical parameters, like for example resonance frequency, Q factor, oscillation amplitude, depend on the pressure. For this purpose, the device may further comprise a function generator circuit or frequency generator 51, configured to cause an input oscillation at each of the first and second micro-cantilevers, by means of an excitation signal.

Moreover, in this option, it is provided that the electronic processing means 10 comprise a processing unit 52 and a demodulating circuit 53, configured to estimate first and second output oscillation frequencies of the first and second micro-cantilevers, respectively, based on the frequency of either the first electrical signal S₁ or of the reference electrical signal S_{ref}, respectively, and of the excitation signal; the demodulating circuit 53 then communicates to the processing unit 52 an information related to these first and second oscillation frequencies and excitation signal frequency.

According to an exemplary embodiment, as shown in the figures, this demodulating circuit 53 is a signal "lock-in" circuit.

The example illustrated above is actually based on a double MEMS/NEMS oscillator, integrated in the device, where the two MEMS/NEMS oscillators share the frequency generation and demodulation lock-in circuit, and are instead characterized by the first and second micro-cantilevers, as the respective active member, as well as by the excitation signal as a reference.

The frequency generation circuit 51 "feeds" both micro-cantilevers 11, 12, and the lock-in circuit 53 detects the output oscillation frequencies of both micro-cantilevers, thereby providing a signal depending on the comparison of these two frequencies and the reference excitation signal.

By considering the device 1 as comprising a double MEMS/NEMS oscillator, it can be understood how a plurality of pressure detection methodologies can be applied. In fact. the device can be configured to detect the pressure based on one or more characteristics of the electrical signals S₁ and S_{ref}: for example, based on a variation in the oscillation frequency relative to a nominal or forcing frequency; or based on a broadening of the oscillation peak, as visible in the spectrum of each electrical signal; or further by measuring the Q factor thereof. To this purpose, it is possible to use, for example, known methodologies and correlations for the operation of micro-cantilever oscillators, among which those reported in Hosaka et al., "Damping characteristics of beam-shaped micro-oscillators", Sensors and Actuators A 49 (1995), 87-95, may be cited for example.

According to different particular exemplary embodiments, the micro-cantilevers 11, 12 of the first and second sensor members are configured to oscillate in a parallel direction or in a perpendicular direction relative to the surface of the chip 40 composing the device.

The role of the reference sensor 12, within the operating procedures of the device 1, will be described in a following part of the description.

The ionization-based detection member 19 is now considered in greater detail. It should be noted that such ionization-based detection member 19 can be considered, in some aspects, as a miniaturized and optimized mass spectrometer, in terms that will be better described herein below.

According to an implementation example, the above-mentioned ionization region 20 contains gas particles, whose pressure is to be measured, and is arranged in such a way to be crossed by ionization electrons generated by the source 21, so that the ionization particles ionize the gas particles, thereby generating respective ions.

The above-mentioned ion extraction means 22 are configured to determine a preferred trajectory for the generated ions, within the ionization region 20, towards at least one ion extraction window 31.

The above-mentioned at least one ion detector 23 has micrometric dimensions and is arranged at the respective at least one ion extraction window 31, such as to be shielded against trajectories of X-rays generated by impacts of the ionizing electrons with parts of the ionization region 20 other than the ion detector 23.

By the term "micrometric dimensions" is meant that the ion detector 23 dimensions are of a micrometric or sub-millimetric order of magnitude. More specifically, the ion detector 23 has an impact surface whose sides (if it has a square or polygonal shape) or whose radius (if it has a circular shape) are of the order of magnitude of tens or hundreds µm (micron) - and anyway sub-millimetric (e.g., about 100 µm) - such that the area of the impact surface is of a micrometric order of magnitude, i.e., less than one mm².

According to an implementation example, the ionization source 21 comprises at least one electron emission source. This source can be for example an "El (Electron Ionization) Smart" source, particularly a "cold" field-effect emission source, such as a nano-tubes and/or micro-tips source; the "cold" emission source increases the ionization efficiency even at extremely low pressures. In other exemplary options, the ionization source can be a plasma (o glow) source, or a chemical ionization (CI) source, or another source, *per*-*se* known, suitable to cause particle ionization according to one of the known ionization methods.

The ionization region 20 can be described as a "chamber" of microscopic dimensions, for example, parallelepiped shaped with sidewalls forming a grid 30 on which the electrons can collide and recombine. At one of the sidewalls, the ionization source 21 can be arranged, emitting particles (for example electrons) that are capable to ionize the gas particles in the "chamber", which electrons travel in an almost straight direction towards the opposite wall (grid).

The ion extraction means 22 are configured to generate suitable electromagnetic fields, such as to extract the ionized particles, thus charged, from inside the chamber and drive them, by means of electromagnetic interaction, along a desired trajectory, or preferential trajectory, passing through one or more preset exit points, where the one or more above-mentioned "extraction windows" 31 are arranged.

In different implementation examples, the extraction windows 31 can be at different points in the ionization region 20 grid.

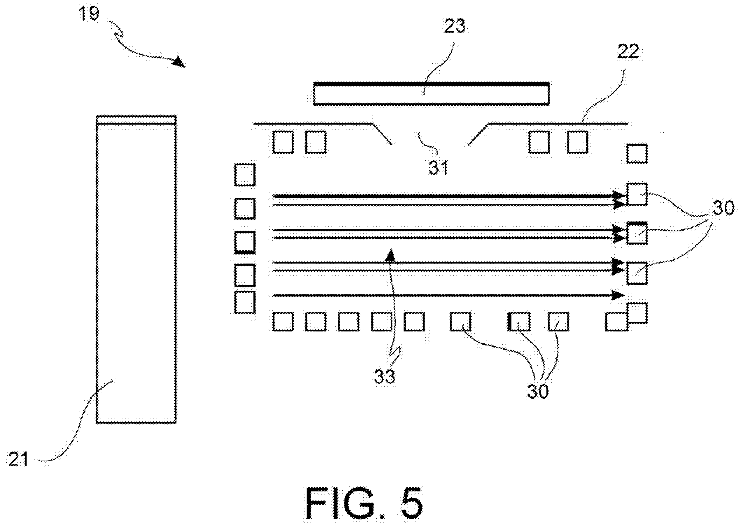

Advantageously (as shown in Fig. 5), the extraction windows can be placed, for example, at the walls that are perpendicular relative to the wall where the ionization source 21 is located, such as to determine ion exit trajectories that are 90°-angled with respect to the electron path 33.

Other embodiments are possible, wherein the exit trajectory is 180°-angled or inclined at a different angle, relative to the electron path (see for example Figs. 2 and 3).

According to different implementation examples included in the invention, the ion extraction means 22 can be made by means of one or more ion guides 22.

Particularly, according to some implementation variants, such ion guides 22 can consist of ion extraction nozzles 22 and/or electrostatic lenses 22 and/or electrostatic sectors and/or magnetic sectors.

More particularly, the ion guides 22 can be implemented by means of a quadrupole mass filter without bias, *per*-*se* known (as will be illustrated below), or by means of a radiofrequency hexapole or octupole or by an electrical or magnetic sector.

Each of the one or more ions detectors 23 can be made by means of a *per*-*se* known detector, which is sensitive to ions colliding on its surface, and configured to generate the above-mentioned second electrical signal S₂ (typically, an electrical current) proportional to the colliding ions number. Since the colliding ions number is proportional to the concentration of ions present in the ionization region 20, which is in turn proportional to the number of gas particles present in the ionization region 20, and thus to the pressure, it is concluded that the second electrical signal S₂ generated by the ion detector 23 is representative, with great precision, of the pressure inside the ionization region.

Particularly, the ion detector 23 can be implemented by employing, on a miniaturized scale, principles used for example in known detectors of the Faraday cup, or SEM, or Channeltron types.

It should be noted that the structure of the ionization-based detection member 19 described above allows to drastically reduce, up to almost cancel, the undesired effects due to the X-rays generated in the ionization region 20 when the electrons emitted by the source recombine on the grid 30. When such X-rays collide on the one or more ions detectors 23, they generate a spurious signal (for example, a spurious electrical current) which disturbs the correct signal (representative of the number of detected ions and thus of the pressure), generates noise, and finally reduces the instrument sensitivity.

The drawbacks related to the X-rays can be reduced by means of each of the different aspect of the device described herein.

Firstly, each of the one or more ion detectors 23 is arranged outside the ionization region 20, i.e., beyond the grids 30 defining the same, and is connected to the same only by means of the one or more respective extraction windows 31, through which the ions to be detected pass. This implies that only the minimal fraction of X-rays passing through these windows (and not the totality of X-rays present in the ionization region) hits the ions detector: thus, the spurious signal generated by the X-rays and the consequent interference is reduced to a corresponding fraction. Thus, the spurious signal generated by the X-rays and the consequent interference is reduced to a corresponding fraction. This is made possible by the fact that the ions can be extracted from the ionization region 20, using any geometry or angle, as shown above.

Secondly, each of the ion detectors 23 has micrometric dimensions, and the reduction of the impact surface causes a proportional reduction of the amount of impacting X-rays.

Thirdly, according to a particular implementation option, the ion extraction means 22 further comprise X-ray radiations shielding means, configured to shield the at least one ion detector relative to X-rays, such as to reduce its exposure to X-rays. Such shielding means can be for example the same extraction lenses 22, or specifically arranged shielding nozzles.

According to an exemplary embodiment, the device 1 further comprises magnetic field generation means 32 (for example, a magnet, or a ferromagnetic material member), configured to generate a magnetic field such as to affect the trajectory of the ionizing electrons in a desired way. For example, this trajectory can be made helicoidal.

The role of the reference sensor 12, enclosed in the sealing and protective casing 13 will be now considered. According to an exemplary implementation, the casing 13 is configured to adopt a closed state and an open state: in the closed state, it protects the at least one second sensor member 12 from being directly exposed to the surrounding environment; in the open state, it allows the at least one second sensor member to be directly exposed to the surrounding environment.

When the casing 13 is closed and sealed, it encloses the second sensor member 12, thus protecting it from degradation phenomena possibly resulting from environmental conditions, and at the same time keeping fixed pressure conditions, stabilized on a known value (the above-mentioned "reference pressure" value P_{ref}) which is a certain and absolute reference point defined *a priori.* Thereby, the second sensor member 12 keeps the "nominal behaviour", for which it has been carefully characterized *a priori,* with a good or excellent accuracy. Thus, the second sensor member takes the important function of "reference sensor", having a stable and anyway predictable behaviour, even during operation.

In greater detail, all the electro-mechanical or mechatronic properties of the second reference sensor member 12 are known, since they have been characterized *a priori* with respect to the reference pressure, for example, as a function of operating temperature, oscillation frequency, oscillation amplitude, and so on; and they have been further stored in a memory included in the electronic processing means 10.

From a mathematical point of view, the characterization data of the reference sensor 12 actually define a "reference hypersurface" allowing to know exactly the mechatronic properties of the sensor member and the operating conditions (for example, operating temperature), based on the reference electrical signal S_{ref} generated by the reference sensor 12, and being known the reference pressure to which it is subjected inside the sealed casing.

Therefore, when the processing means 10 receive an electrical signal S_{ref} from the reference sensor 12, they refer it to the known reference pressure value P_{ref}, as maintained inside the sealed casing 13, and thus, based on the stored characterization data, the processing means 10 can know both the mechatronic properties and the operating conditions of the reference sensor 12. Consequently, the processing means 10 are also able to calculate the exact conversion factor existing between S_{ref} and P_{ref} (which will be herein designated as "reference conversion factor").

It should be noted that the operating conditions of the reference sensor 12 are essentially the same conditions, except for the pressure, that are undergone by the first electro-mechanic sensor member 11 and by the ionization-based detection member 19, which members are very close to each other in the device 1.

Thus, when the first electro-mechanic sensor member 11 is active, the processing means 10 are able to calculate a suitable conversion factor (which will be herein designated as "first conversion factor", or "first calibration factor") to be applied to the signal S₁ generated by the first sensor member 11, in order to calculate exactly the pressure value P to which the first sensor member 11, thus the device 1, is subjected, i.e., the value to be measured.

Similarly, when the ionization-based detection member 19 is active, the processing means 10 are able to calculate another suitable conversion factor (which will be herein designated "second conversion factor" or "second calibration factor") to be applied to the signal S₂ generated by the ionization-based detection member 19, in order to calculate exactly the pressure value P to which this detection member 19, thus the device 1, is subjected, i.e., the value to be measured.

The first and second conversion factors are indeed correlated in a deterministic and known manner (because of the initial characterization) to the reference conversion factor.

Briefly, due to the fact of receiving information both from the reference sensor 12, on one hand, and from the first sensor member 11 or from the ionization-based detection member 19, on the other hand, the processing means 10 are capable in any case to estimate more accurately the actual pressure present at the device, i.e., the measured pressure P, taking into both the reference electrical signal S_{ref}, on the one hand, and the first S₁ or second S₂ electrical signals, on the other hand.

It should be also noted that, according to an implementation option, the device includes a plurality of reference sensor members 12 to detect a respective plurality of reference pressure values P_{ref}, and the electronic processing means 10 are further configured to generate the measured pressure value P based on a processing of the detected reference pressure values P_{ref}. The plurality of "reference sensors" can be exploited both to improve the estimate precision, along the whole measurement range of the device, and for the sake of redundancy and reliability.

According to different implementation options, in order to ensure a calibration both for the first sensor member 11 and for the ionization-based detection member 19, two different reference sensor members 12 may be provided, one for each of the above-mentioned members.

The operation described above occurs both upon activation of the device 1 and during the normal operating cycle; thus, it actually carries out an "initial self-calibration" and a "running calibration" procedure, which the device is able to perform.

Moreover, according to a further implementation example, the electronic processing means 10 are configured to process data received from the first sensor member 11 or from the detection member 19, on the one side, and from the reference sensor 12, on the other side. The electronic processing means 10 are further configured, based on such received data, to carry out a diagnostic procedure on the first sensor member 11, such as to identify potential hysteresis phenomena and/or imperfections and/or potential thermal and/or mechanical drifts which the first sensor member is subject to, and/or a diagnostic procedure of the ionization-based detection member 19, such as to identify possible performances degradation phenomena which the ionization-based detection member is subject to.

More precisely, when the pressure existing in the environment of the device is known, and is equal to the reference pressure, the signals S₁ or S₂, on the one side, and the reference signal S_{ref}, on the other side, are compared.

In this case, if the difference between the reference signal S_{ref} and the electrical signal S₁ (or S₂ depending on the case is a relatively small quantity, less than a preset threshold, it means that the first sensor member 11 (or the ionization-based detection member 19, respectively) works well, and diagnostics have a positive outcome; possibly, the detected difference is compensated by acting on the above-mentioned first conversion factor (or second conversion factor, respectively), in a way similar to what described above about the calibration.

On the other hand, if the difference between the reference signal S_{ref} and the electrical signal S₁ (or S₂ depending on the case) is a relatively significant quantity, for example larger than the above-mentioned threshold, diagnostics have a negative outcome, and a mere calibration compensation is not sufficient anymore.

According to an implementation example, the device 1 is capable to carry out a diagnostic procedure even if the external environment pressure is not known, or if it does not coincide with the reference pressure, as long as this pressure is within the operation range of the reference sensor 12. In this example, the casing 13 is temporarily opened, such as to temporarily expose the second sensor member 12 to the same environment to which the first sensor member 11 and the ionization-based detection member 19 are exposed. Then, the diagnostic procedure is performed, and finally the casing 13 is closed and sealed again and the reference pressure conditions are restored, for example by means of an embedded "getter".

In case a plurality of second sensor members 12 are provided, it is possible to keep one of them always closed and sealed, under reference pressure conditions.

In case the diagnostic yields a negative outcome, according to a further exemplary option, the electronic processing means 10 are further configured to carry out an adjusting procedure of the device 1, based on the results of said diagnostic procedure. This adjustment procedure includes an adjusting and/or compensation and/or optimization procedure of the first sensor member 11, to correct and/or compensate hysteresis phenomena and/or imperfections and/or identified drifts, and also an adjusting and/or compensation and/or optimization procedure on the ionization-based detection member to correct and/or compensate performances degradation phenomena.

It should be noted that, in other implementation examples, the adjustment can be performed also based on optimization procedures directly operating on the electrical/electronic variables on which the detection mechanism is based.

The advantage of having available a diagnostic procedure in the device 1, which is actually a "self-diagnostic", is evident. The further advantage of having available the consequent adjusting (o recalibration) procedure, which is actually a "self-adjusting", is also evident.

Only if even this "self-adjusting" procedure fails to restore proper operating conditions, a failure signal is sent from the electronic processing means 10, towards the higher level system controllers.

In order to allow the adjusting procedure, the device 1 further comprises controlled heating means, comprising one or more temperature sensors 61 (miniaturized thermometer(s)) and at least one heating member 62 (for example, one or more micro-resistors), placed near and/or over the first sensor member 11 and the ionization-based detection member 19, and a heat supply (or "heater") 63. The heating member 62 is configured to carry out a degassing and/or a removal of gases adsorbed on the micro-cantilever 11 surface of the first sensor member 11, and in suitable portions of the ionization-based detection member 19. This is done under the control of the electronic processing means 10, which in turn operate based on the temperature detected by the thermometer 61 and on the results of the diagnostic procedure.

In this case, the above-mentioned adjusting procedure of the first sensor member 11 comprises the degassing and/or removal of gases adsorbed on the micro-cantilever 11 surface, by means of the controlled heating means. The above-mentioned adjusting procedure of the ionization-based detection member 19 comprises the degassing and/or removal of gases adsorbed in portions of the ionization-based detection member 19, by means of the controlled heating means.

It should be noticed that the above-mentioned heat supply 63 can be used to vary the operating thermal conditions of the device, in a controlled manner, also in operating steps other than self-adjusting.

According to an exemplary implementation, the device 1 further comprises specific protection technical thin films configured to reduce the adsorption of process gases (for example hydrophobic films to prevent the adsorption of moisture present in the process environment) and to prevent corrosion phenomena. These protection thin films are arranged such as to cover at least the first sensor member 11 and the ionization-based detection member 19.

According to a further exemplary implementation, the device further comprises a package 80 comprising micrometric frame filters, and/or anti-particulate filters, arranged such as to cover at least the sensor members 11, 12, and the ionization-based detection member 19 included in the device 1, and configured to protect them from particulate or soot. This option is particularly advantageous when the device 1 is intended to be used in industrial environments.

The example described here is shown in the exploded view of Fig. 3, with reference to an embodiment of the device 1, but it can be also applied in other embodiments.

According to an implementation option, the electronic processing means 10 comprise at least one electronic processor (CPU) 52 integrated in the device 1. This CPU can then operate as an embedded on-chip programmable microprocessor.

According to an implementation example, the interface means 15 comprise input and output means, wireless or wired and/or with pins. As a whole, this interface can interact with the external world (for example with an external plant control system) in a versatile and adaptable manner, both to transmit and to receive information and/or signals and/or commands.

According to an implementation option, the interface means 15 comprise both wired input means 71 and a wireless transmitter 70 (for example a WiFi transmitter), to remotely transmit signals from closed operation areas (such as pump internal zones, process and measurement systems), and output pins 72 able to provide for example a direct analog output signal and/or a digital TTL output signal and/or an interface for a serial communication protocol.

The presence of a CPU 52 and of an interface 15, integrated in the device, allows the device 1 to receive and send information (for example, control signals) from and to a higher-level control system, for example the operating plant/environment control system where the device operates. Thereby, the device 1 is completely integrated in this operating plant/environment.

According to an exemplary implementation option, the device 1 comprises further embedded electronic circuitry, comprising one or more of the following electronics circuits: dedicated I/O management circuits, a supply and management circuit 64 (connected to an external supply interface 65) of the heating member, a management circuit 67 of the detection member (comprising a voltage supply connected to the ionization-based detection member 19 parts that require to be kept to controllable voltages), a processing circuit 66 of the signal coming from the at least one ion detector 23 of the detection member (comprising *inter alia* a current/voltage converter).

Several "auxiliary" electronic circuits, optionally present in the device 1 (frequency generator 51, lock-in circuit 52, heater 53, dedicated I/O management circuits, management circuits 67 of the detection member, etc.). These auxiliary electronic circuits are integrated in the device 1. Optionally, they can be made in the same chip containing the sensor members, the processing means and the interface means, or in further chip, micro-connected to the above mentioned main chip, such as to constitute the integrated device.

Referring to structural characteristics of the device, it has been already previously observed that Fig. 3 shows an embodiment where the chip 40 of the device 1 is a "multi-layer" chip where the ionization-based detection member 19 (with related circuitry and optionally a respective reference sensor) is in one layer; the controlled flow opening/closing means 90 are in another layer; and the sensor member 11 (with related circuitry and optionally a respective reference sensor) is in a further layer.

Further embodiments, also included in the invention, may be implemented by arranging the above-mentioned components of the device in any combination in the different layers, and also by arranging each of these members on either side of the layers of the multi-layer chip 40.

Preferred implementation options provide that the heat generating components (for example, the processor 52 or the heating micro-resistor 62) are "segregated", in the chip layer where they are, on an opposite side relative to the other components. Thereby, the effect of the heat generated by these components on the other components is minimized. Moreover, by placing a suitable selection of components on the sides facing outwardly the device, it is possible to improve the performances in terms of heat dissipation.

As remarked above, the device 1 described above is able to detect pressure values between 10⁻¹³ mbar and 10⁴ mbar, wherein the first pressure sub-range comprises for example pressures between 10⁻⁴ mbar and 10⁴ mbar and the second pressure sub-range comprises for example pressures between 10⁻¹³ mbar and 10⁻⁴ mbar.

The case where the device 1 performs functions of measurement of gas partial pressures and Gas Analysis or Residual Gas Analysis (RGA) will be now considered in greater detail. This can be done in two different conditions: with the valve open, under either vacuum or UHV pressure conditions, or under non-vacuum pressure conditions, with the valve closed, but with nano-pores open and pumping active.

In these conditions, the ionization-based detection member 19 comprises at least one ion selective filtering member, which is configured to shield the at least one ion detector from all the ions but one respective selected ion, in such a way that the at least one ion detector measures the partial pressure related to such selected ion.

According to an exemplary implementation, the filtering member is a filtering member that can be tuned to select and send sequentially different types of ions on the same ion detector, so that such ion detector sequentially measures the partial pressure of the different selected ions, such as to perform a Gas Analysis or Residual Gas Analysis function.

According to one particular embodiment, the ionization-based detection member 19 comprises a plurality of additional ion detectors to detect a respective plurality of ions. The plurality of additional ion detectors can be coupled with a respective plurality of ion selective filtering members, or with only one, each of them being configured to shield the respective ion detector from all the ions but a respective selected ion, so that the device operates both as meter of total pressure, and as a meter of partial pressure related to each one of the plurality of selected ions, thereby performing a Gas Analysis or Residual Gas Analysis function.

In a particular implementation example, each of the at least one ion selective filtering member comprises a quadrupole mass filter, according to operation principles *per*-*se* known (described for example in Reinhard - von Zahn, "Das elektrische Massenfilter als Massenspektrometer und Isotopentrenner" Zs. Physik, 152, (1958), 143-182; or in Greaves, "Vacuum mass spectrometry", Vacuum, 20, (1970), 65-74).

In other implementation examples, the filtering member comprises electrical sectors and/or magnetic sectors.

In other terms, the device 1, based on the basic structure described at the beginning of this description, can be advantageously adapted such as to also become a device for performing Gas Analysis or Residual Gas Analysis, substantially operating on the ion extraction means 23, and applying theories *per*-*se* known in the mass spectrometry field.

The above-mentioned filter members, when made by means of quadrupole filters, are driven by voltages, having different amplitudes and waveforms, for example having a DC amplitude value U, and/or a superimposed oscillation amplitude value V and a superimposed oscillation frequency ω. By operating on these variables, for example, different trajectories or speeds can be imposed, in a controlled manner, to the various kinds of ions, mainly depending on their mass.

Thus, it is possible make sure that only a desired type of ions, or any subset of ions, or all the ions, once extracted through the extraction windows 31, have a trajectory allowing them to collide on the ion detectors 23. In this way, it is possible to obtain, in a controlled manner, according to what is desired, total pressure measurements, partial pressure of each of different ions, and Gas Analysis or Residual Gas Analysis.

Moreover, by varying the above-mentioned electrical variables in a controlled and desired manner over time, it is possible to operate sequentially a series of different measurements, thus progressively tuning the device to measure ions of different kind and mass.

In a functional condition example, the device 1 operates in the following way.

When the valve 91 of the controlled flow opening/closing means 90 is open, the first sensor member 11 and the ionization-based detection member 19 cooperate to provide pressure measurements, and the ionization-based detection member 19 operate Gas Analysis or Residual Gas Analysis measurements in low pressure environment conditions.

Under high pressure environment conditions, the valve 91 of the controlled flow opening/closing means 90 is closed, and the nano-pores of the nano-pores layer 92 are opened, the first sensor member 11 performs pressure measurements, and the ionization-based detection member 19 performs Gas Analysis or Residual Gas Analysis measurements on a low pressure gas mixture having the same gas concentrations as the gas mixture present at the first sensor member 11.

A method for measuring pressure and gas concentration over a very wide pressure range, carried out by means of a device according to the invention, will be now described.

The method comprises the steps of automatically detecting an operative pressure measurement range, by electronic means 10 of the device 1, based on a sequential turning on of a first sensor member 11 of the device 1, configured to measure pressures within a first sub-range, and of an ionization-based detection member 19 of the device 1, configured to measure pressures within a second sub-range.

If the detected operative range is the first sub-range, then the method comprises the step of detecting a first pressure value P₁ and generating a first electrical signal S₁ representative of the first pressure value P₁, by the first sensor member 11 of the device 1.

On the other hand, if the detected operating range is the second sub-range, the method comprises the step of detecting a second pressure value P₂ and generating a second electrical signal S₂ representative of the second pressure value P₂, by the ionization-based detection member 19.

The method then comprises the step of determining, by the electronic processing means 10, a measured pressure value P based on the above-mentioned first or second electrical signals, S₁ and S₂; and finally of providing in output the measured pressure value P, by interface means 15 of the device 1.

The method further comprises the step of controlling, by means of the electronic processing means 10, a fluidic communication, which is carried out through controlled flow opening/closing means 90 present in the device 1, between the ionization-based detection member 19 and an environment where the first sensor member 11 is located, to allow the ionization-based detection member to measure gas concentration (thus, gas partial pressure), whichever is the operative pressure range in which the method is operating.

The above-mentioned first sensor member 11, ionization-based detection member 19, controlled flow opening/closing means 90, electronic processing means 10 and interface means 15 are included in a single integrated device.

In an exemplary embodiment, the above-mentioned sequential activation step provides that, when the first sensor member 11 is activated, the controlled flow opening/closing means 90 are in a condition where they seal and insulate the ionization-based detection member 19 from the environment; and also provides that, in case the first sensor member 11 has not provided any significant result, and before the activation of the detection member 19, the controlled flow opening/closing means 90 are put in a condition where they allow a direct macro-fluidic communication between the first sensor member 11 and the detection member 19, thus equalizing the pressures to which they are subjected, while pumping is turned off.

According to a further exemplary embodiment, the method further comprises the step of measuring gas partial pressures, by means of the ionization-based detection member 19, in conditions of macro-fluidic communication between the first sensor member 11 and the ionization-based detection member 19, if the method operates in the second pressure sub-range; or the step of measuring gas partial pressures, by means of the ionization-based detection member 19, in conditions of micro-fluidic communication in molecular regime between the first sensor member 11 and the ionization-based detection member 19, if the method operates in the first pressure sub-range.

According to a further exemplary embodiment, the method further comprises the steps of storing characterization data of a further reference sensor member 12 of the device 1, at a reference pressure P₂ in the electronic processing means 10; maintaining the further reference sensor member 12 at the reference pressure P₂, inside a casing 13; calibrating the first sensor member 11, the ionization-based detection member 19 and the further reference sensor member 12, by means of the electronic processing means 10, based on a reference electrical signal S₂ generated by the reference sensor member 12 and based on the above-mentioned characterization data.

As it can be seen, the object of the present invention is achieved by the system described above, by virtue of the illustrated characteristics.

First of all, from what has been described above, it is apparent that the device of the present invention is a miniaturized device capable of maintaining high precision and reliability performances, and moreover capable of measuring pressures within a very wide range of at least 18 orders of magnitude, from 10⁻¹³ mbar to 10⁴ mbar, thus becoming an almost universal single device for pressure measurements.

Moreover, because of its functional and structural characteristics illustrated above, the same device allows advantageously to also perform Gas Analysis or Residual Gas Analysis functions over the entire measurable pressure range.

It is also important to remark that the device, as described above, proves to be self-contained, because it is capable of self-calibration and self-diagnostic. The device is able to deal with, and to correct up to a certain extent, the several degradation causes that may actually arise and which would worsen the device performances, by affecting the sensor members.

Finally, the device allows, as illustrated above, to manage microscopic signals at microscopic level, with the consequent further advantage to enhance the achievable signal-to-noise ratios.

## Claims

1. A miniaturized device (1) for pressure measurements over a very wide range and for gas concentration measurements, comprising:
- at least one first electro-mechanical miniaturized sensor member (11) configured to detect a first pressure value (P₁), in a first sub-range of measurable pressures, and generate a first electrical signal (S₁) representative of the first pressure value (P₁);
- an ionization-based detection member (19), configured to detect a second pressure value (P₂), in a second sub-range of measurable pressures, and comprising at least one ionization source (21), an ionization region (20), ion extraction means (22), and at least one ion detector (23), configured to detect ions and generate a second electrical signal (S₂) depending on the amount of ions detected and representative of the second pressure value (P₂);
- controlled flow opening/closing means (90), configured to control a fluidic communication between the ionization-based detection member (19) and an environment in which the first sensor member (11) is located;
- electronic processing means (10), operatively connected to said first sensor member (11) and ionization-based detection member (19), and configured to determine a measured pressure value (P) based on said first (S₁) and second (S₂) detected electrical signals; the electronic processing means (10) being further operatively connected to the controlled flow opening/closing means (90) and further configured to control the condition thereof;
- interface means (15), operatively connected to said electronic processing means (10) and configured to provide in output said measured pressure value (P),
wherein:
- said first sensor member (11), ionization-based detection member (19), controlled flow opening/closing means (90), electronic processing means (10) and interface means (15) are comprised in a single integrated device;
- the controlled flow opening/closing means (90) are configured to take, in a controlled manner: a closed condition, in which they seal and insulate the ionization-based detection member (19) with respect to the environment to which the first sensor member (11) is exposed; a micro-fluidic opening condition, in which they inhibit a macro-fluidic communication, while allowing a micro-fluidic communication between the ionization-based detection member (19) and the first sensor member (11); a macro-fluidic opening condition, in which they allow a macro-fluidic communication between the ionization-based detection member (19) and the first sensor member (11), so as to expose them to a same pressure condition;
- the ionization-based detection member (19) is further configured to measure a gas concentration, under micro-fluidic opening condition of the controlled flow opening/closing means (90), in presence of a pressure belonging to the first sub-range, and to measure a gas concentration, under macro-fluidic opening condition of the controlled flow opening/closing means (90), in presence of a pressure belonging to the second sub-range.

2. The device (1) according to claim 1, having a tridimensional configuration, and wherein each of said first sensor member (11), ionization-based detection member (19) and controlled flow opening/closing means (90) extends along two directions, the controlled flow opening/closing means (90) being configured to control a fluid communication between the ionization-based detection member (19) and the first sensor member (11);
and wherein the first sensor member (11), the ionization-based detection member (19) and the controlled flow opening/closing means (90) are overlaid along the third direction perpendicular to the first two ones, so that, considering the third direction, the controlled flow opening/closing means (90) are interposed between the first sensor member (11) and the ionization detection member (19).

3. The device (1) according to one of the preceding claims, further comprising a miniaturized pumping member (93), configured to pump gases from the ionization-based detection member (19), so as to keep, if it is turned on under the control of the processing means (10), a pressure gradient between the first sensor member (11) and the ionization-based detection member (19).

4. The device (1) according to the claims 1 and 3, wherein the controlled flow opening/closing means (90) comprise:
- at least one valve (91), configured to take an opening state, in which it allows a macro-fluidic communication between the first sensor member (11) and the ionization-based detection member (19), so that they are at the same pressure conditions if the miniaturized pumping member (93) is not turned on, and a closed state, in which said macro-fluidic communication is not allowed;
- a micro-fluidic communication layer (92), comprising nano-pores, suitable to be opened or closed, in a controlled manner, adapted to let respective micro-flows pf gas pass or not, said micro-fluidic communication layer (92) being configured to put in micro-fluidic communication, in a selective and controlled manner, the first sensor member (11) and the ionization detection member (19), if the valve (91) is in a closed state, and, if the miniaturized pumping member (93) is turned on, such as to make uniform the gas concentration, between the first sensor member (11) and the ionization-based detection member (19), while keeping a different pressure one from the other.

5. The device (1) according to any of the preceding claims, wherein the range of measurable pressures is divided into two measurement sub-ranges, and wherein the electronic processing means (10) are configured to generate the measured pressure value (P) as coincident with the first (P₁) or, if the valve is in opening conditions, with the second (P₂) detected pressure value depending on the fact that the pressure to be measured belongs to one or the other one of the measurement sub-ranges,
and wherein the electronic processing means (10) are configured to automatically detect the measurement sub-range, based on a sequential turning on of the device, starting from the first sensor member (11).

6. The device (1) according to any of the preceding claims, wherein said first sensor member (11), ionization-based detection member (19), controlled flow opening/closing means (90), electronic processing means (10) and interface means (15) are comprised in a single chip of the integrated device.

7. The device (1) according to one of the preceding claims, further comprising at least one second miniaturized electro-mechanical pressure sensor member (12), arranged within a respective casing (13), suitable to seal the second sensor member (12), and configured to detect a third pressure value (P_{ref}), acting as a reference pressure value (P_{ref}),and wherein each of said first (11) and second (12) sensor members comprises a respective oscillating member of the MEMS/NEMS type, configured to oscillate with a dynamic response that depends on the pressure to which it is subjected.

8. The device (1) according to any of the preceding claims, wherein the ionization region (20) of the ionization-based detection member (19) contains gas particles the pressure of which has to be measured, and it is arranged so as to be passed through by ionization particles generated by the ionization source (21), so that the ionization particles ionize the gas particles, generating respective ions;
and wherein the ion extraction means (22) are configured to determine a preferential trajectory for the generated ions, passing through at least one ion extraction window, through which the ions leave the ionization region (20), said ion extraction means (22) comprising at least one ion guide and/or X-ray radiation shielding means, configured to shield the at least one ion detector (23) against said X rays, so as to reduce the exposure thereof to X rays;
and wherein the at least one ion detector (23) has micrometer dimensions, and it is arranged respectively at said at least one ion extraction window, so as to be shielded against trajectories of X rays generated by impacts of the ionizing electrons with parts of the ionization region (20) other than the at least one ion detector (23).

9. The device (1) according to claim 8, wherein the electronic processing means (10) comprise a memory, configured to store characterization data characterizing the reference sensor member (12) at the reference pressure (P_{ref}), said processing means (10) being further connected with said second sensor member (12) to receive the reference electrical signal (Sref),
and wherein the electronic processing means (10) are configured to calibrate the first sensor member (11), the ionization detection member (19) and the reference sensor member (12) based on the reference electric signal (S_{ref}) and the stored characterization data,
and wherein the electronic processing means (10) are further configured to process the data received from said second reference sensor member (12), and to carry out, based on said received data:
- a diagnostic procedure of the ionization detection member (19), so as to identify possible performance degradation phenomena to which the ionization detection member (19) is subjected, and
- a diagnostic procedure of the first sensor member (11), so as to identify possible hysteresis phenomena and/or imperfections and/or possible thermal and/or mechanical drifts to which the first sensor member (11) is subjected,
and wherein the electronic processing means (10) are configured to carry out, in the case that the diagnostic procedure yields a negative outcome:
- an adjustment and/or compensation and/or optimization procedure of the first sensor member (11) to correct and/or compensate identified hysteresis phenomena and/or imperfections and/or drifts, based on the results of said diagnostic procedure;
- an adjustment and/or compensation and/or optimization procedure on the ionization detection member (19) to correct and/or compensate performance degradation phenomena, that are identified based on the results of said diagnostic procedure.

10. The device (1) according to any of the preceding claims, configured to detect pressure values ranging between 10⁻¹³ mbar and 10⁻⁴ mbar, wherein the first sub-range of pressures comprises pressures between 10⁻⁴ mbar and 10⁴ mbar, detectable by means of the first electro-mechanical miniaturized sensor member (11), and the second sub-range of pressures comprises pressures between 10⁻¹³ mbar and 10⁻⁴ mbar, detectable by means of the ionization-based detection member (19).

11. The device (1) according to any of the preceding claims, wherein the ionization-based detection member (19) comprises at least one selective ion filtering member, configured to shield the at least one ion detector (23) against all the ions except for a respective selected ion, so that the at least one ion detector (23) measures the partial pressure relative to said selected ion,
and wherein the filtering member is a filtering member tunable to select and send in sequence ions of different types on a same ion detector (23), so that said ion detector (23) measures in sequence the partial pressure and/or concentration of the different ions selected,
and wherein the ionization detection member (19) comprises a plurality of additional ion detectors (23) to detect a respective plurality of ions, the plurality of additional ion detectors (23) being coupled to a respective plurality of said selective ion filtering members, each of said selective ion filtering members being configured to shield the respective ion detector (23) against all the ions except for a respective selected ion, so that the device (1) acts both as a meter of total pressure, and as a meter of partial pressure relative to each of the plurality of said selected ions.

12. The device (1) according to claim 11, wherein:
- if the valve (91) of the controlled flow opening/closing means (90) is open, the first sensor member (11) and the ionization-based detection member (19) cooperate to provide pressure measurements, and the ionization detection member (19) operates measurements of Gas Analysis or Residual Gas Analysis if in conditions of low environmental pressure;
- if under high environmental pressure conditions, the valve (91) of the controlled flow opening/closing means (90) is closed, and the nano-pores of the layer of nano-pores (92) are open, the first sensor member (11) operates pressure measurements, and the ionization-based detection member (19) operates measurements of Gas Analysis or Residual Gas Analysis on a mixture of low pressure gases having the same gas concentrations as the mixture of gases present at the first sensor member (11).

13. A method for measuring pressure and concentration of gases, over a very wide range of pressures, by a miniaturized device (1), the method comprising the steps of:
- automatically detecting an operative pressure measurement range, by electronic means (10) of the device (1), based on a sequential turning on of a first sensor member (11) of the device (1), configured to measure pressures in a first sub-range, and of an ionization-based detection member (19) of the device (1), configured to measure pressures in a second sub-range;
- if the detected operative sub-range is the first sub-range, detecting a first pressure value (P₁) and generating a first electrical signal (S₁) representative of the first pressure value (P₁), by the first sensor member (11);
- if the detected operative sub-range is the second sub-range, detecting a second pressure value (P₂) and generating a second electrical signal (S₂) representative of the second pressure value (P₂), by the ionization detection member (19);
- determining, by the electronic processing means (10), a measured pressure value (P) based on said first (S₁) or second electrical signal (S₂);
- providing in output the measured pressure value (P), by interface means (15) of the device (1);
- controlling, by the electronic processing means 10, by means of the controlled flow opening/closing means (90) of the device (1), a fluidic communication between the ionization detection member (19) and an environment in which the first sensor member (11) is located, to allow the ionization detection member (19) measuring gas concentrations, whichever the operative pressure range in which the method is operating is;
said first sensor member 11, ionization-based detection member 19, controlled flow opening/closing means 90, electronic processing means 10 and interface means 15 being comprised in a single integrated device;
the method further comprising the step of:
- measuring partial gas pressures, by the ionization-based detection member (19), under macro-fluidic communication conditions between the first sensor member (11) and the ionization-based detection member (19), if the method operates in the second sub-range of pressures;
- or, measuring partial gas pressures, by the ionization-based detection member (19), under micro-fluidic communication conditions in molecular regime between the first sensor member (11) and the ionization-based detection member (19), if the method operates in the first sub-range of pressures.

## Patentansprüche

1. Miniaturisierte Vorrichtung (1) für Druckmessungen über einen sehr breiten Bereich und für Gaskonzentrationsmessungen, umfassend:
- wenigstens ein erstes elektromechanisches miniaturisiertes Sensorelement (11), welches dazu eingerichtet ist, einen ersten Druckwert (P₁) in einem ersten Unterbereich von messbaren Drücken zu erfassen und ein erstes elektrisches Signal (S₁) zu erzeugen, welches den ersten Druckwert (P₁) darstellt;
- ein Ionisations-basiertes Erfassungselement (19), welches dazu eingerichtet ist, einen zweiten Druckwert (P₂) in einem zweiten Unterbereich von messbaren Drücken zu erfassen und umfassend wenigstens eine lonisationsquelle (21), einen lonisationsbereich (20), lonen-Extraktionsmittel (22) und wenigstens einen lonendetektor (23), welcher dazu eingerichtet ist, Ionen zu erfassen und ein zweites elektrisches Signal (S₂) zu erzeugen, welches von der Menge von erfassten Ionen abhängt und den zweiten Druckwert (P₂) darstellt;
- geregelte/gesteuerte Strom-Öffnungs-/Schließ-Mittel (90), welche dazu eingerichtet sind, eine fluidische Kommunikation zwischen dem Ionisations-basierten Erfassungselement (19) und einer Umgebung zu regeln/steuern, in welcher das erste Sensorelement (11) angeordnet ist;
- elektronische Verarbeitungsmittel (10), welche mit dem ersten Sensorelement (11) und dem Ionisations-basierten Erfassungselement (19) betriebsmäßig verbunden sind und dazu eingerichtet sind, einen gemessenen Druckwert (P) auf Grundlage des ersten (S₁) und des zweiten (S₂) erfassten elektrischen Signals zu bestimmen; wobei die elektronischen Verarbeitungsmittel (10) ferner mit den geregelten/gesteuerten Strom-Öffnungs-/Schließ-Mitteln (90) betriebsmäßig verbunden sind und ferner dazu eingerichtet sind, den Zustand davon zu regeln/steuern;
- Schnittstellenmittel (15), welche mit den elektrischen Verarbeitungsmitteln (10) betriebsmäßig verbunden sind und dazu eingerichtet sind, den gemessenen Druckwert (P) als Ausgabe bereitzustellen,
wobei:
- das erste Sensorelement (11), das Ionisations-basierte Erfassungselement (19), die geregelten/gesteuerten Strom-Öffnungs-/Schließ-Mittel (90), die elektronischen Verarbeitungsmittel (10) und die Schnittstellenmittel (15) in einer einzelnen integralen Vorrichtung umfasst sind;
- die geregelten/gesteuerten Strom-Öffnungs-/Schließ-Mittel (90) dazu eingerichtet sind, in einer geregelten/gesteuerten Weise das Folgende anzunehmen: einen geschlossenen Zustand, in welchem sie das Ionisations-basierte Erfassungselement (19) in Bezug auf die Umgebung abdichten und isolieren, welcher das erste Sensorelement (11) ausgesetzt ist; einen mikrofluidischen Öffnungszustand, in welchem sie eine makrofluidische Kommunikation verhindern, während eine mikrofluidische Kommunikation zwischen dem Ionisations-basierten Erfassungselement (19) und dem ersten Sensorelement (11) erlaubt wird; einen makrofluidischen Öffnungszustand, in welchem sie eine makrofluidische Kommunikation zwischen dem Ionisations-basierten Erfassungselement (19) und dem ersten Sensorelement (11) erlauben, um sie einer gleichen Druckbedingung auszusetzen;
- das Ionisations-basierte Erfassungselement (19) ferner dazu eingerichtet ist, eine Gaskonzentration unter dem mikrofluidischen Öffnungszustand der geregelten/gesteuerten Strom-Öffnungs-/SchließMittel (90) in Anwesenheit eines Drucks, welcher zu dem ersten Unterbereich gehört, zu messen und eine Gaskonzentration unter dem makrofluidischen Öffnungszustand der geregelten/gesteuerten Strom-Öffnungs-/Schließ-Mittel (90) in Anwesenheit eines Drucks, welcher zu dem zweiten Unterbereich gehört, zu messen.

2. Vorrichtung (1) nach Anspruch 1, welche eine dreidimensionale Konfiguration aufweist, und wobei sich jedes aus dem ersten Sensorelement (11), dem Ionisations-basierten Erfassungselement (19) und den geregelten/gesteuerten Strom-Öffnungs-/Schließ-Mitteln (90) entlang von zwei Richtungen erstreckt, wobei die geregelten/gesteuerten Strom-Öffnungs-/Schließ-Mittel (90) dazu eingerichtet sind, eine Fluid-Kommunikation zwischen dem Ionisations-basierten Erfassungselement (19) und dem ersten Sensorelement (11) zu regeln/steuern;
und wobei das erste Sensorelement (11), das Ionisations-basierte Erfassungselement (19) und die geregelten/gesteuerten Strom-Öffnungs-/Schließ-Mittel (90) entlang der dritten Richtung, welche rechtwinklig zu den ersten beiden ist, überlagert sind, so dass, in Betrachtung der dritten Richtung, die geregelten/gesteuerten Strom-Öffnungs-/Schließ-Mittel (90) zwischen dem ersten Sensorelement (11) und dem Ionisations-Erfassungselement (19) angeordnet sind.

3. Vorrichtung (1) nach einem der vorhergehenden Ansprüche, ferner umfassend ein miniaturisiertes Pumpelement (93), welches dazu eingerichtet ist, Gase von dem Ionisations-basierten Erfassungselement (19) zu pumpen, um einen Druckgradienten, falls es unter der Regelung/Steuerung der Verarbeitungsmittel (10) eingeschaltet wird, zwischen dem ersten Sensorelement (11) und dem Ionisations-basierten Erfassungselement (19) zu halten.

4. Vorrichtung (1) nach den Ansprüchen 1 und 3, wobei die geregelten/gesteuerten Strom-Öffnungs-/Schließ-Mittel (90) umfassen:
- wenigstens ein Ventil (91), welches dazu eingerichtet ist, einen Öffnungszustand, in welchem es eine makrofluidische Kommunikation zwischen dem ersten Sensorelement (11) und dem Ionisationsbasierten Erfassungselement (19) erlaubt, so dass sie bei den selben Druckbedingungen vorliegen, falls das miniaturisierte Pumpelement (93) nicht eingeschaltet ist, und einen geschlossenen Zustand einzunehmen, in welchem die makrofluidische Kommunikation nicht erlaubt ist;
- eine mikrofluidische Kommunikationsschicht (92), umfassend Nanoporen, welche dazu geeignet sind, in einer geregelten/gesteuerten Weise geöffnet oder geschlossen zu werden, welche dazu eingerichtet sind, jeweilige Mikroströme von Gas passieren zu lassen oder nicht, wobei die mikrofluidische Kommunikationsschicht (92) dazu eingerichtet ist, in einer wählbaren und geregelten/gesteuerten Weise das erste Sensorelement (11) und das Ionisations-Erfassungselement (19) in mikrofluidische Kommunikation zu setzen, falls das Ventil (91) in einem geschlossenen Zustand ist, und, falls das miniaturisierte Pumpelement (93) eingeschaltet ist, um die Gaskonzentration zwischen dem ersten Sensorelement (11) und dem Ionisations-basierten Erfassungselement (19) einheitlich zu machen, während ein voneinander unterschiedlicher Druck gehalten wird.

5. Vorrichtung (1) nach einem der vorhergehenden Ansprüche, wobei der Bereich von messbaren Drücken in zwei Mess-Unterbereiche unterteilt ist, und wobei die elektronischen Verarbeitungsmittel (10) dazu eingerichtet sind, den gemessenen Druckwert (P) als mit dem ersten (P₁) oder, falls das Ventil in Öffnungszuständen vorliegt, mit dem zweiten (P₂) erfassten Druckwert in Abhängigkeit der Tatsache, dass der zu messende Druck dem einen oder dem anderen der Mess-Unterbereiche angehört, zusammenfallend zu erzeugen,
und wobei die elektronischen Verarbeitungsmittel (10) dazu eingerichtet sind, den Mess-Unterbereich auf Grundlage eines sequenziellen Einschaltens der Vorrichtung automatisch zu erfassen, beginnend bei dem ersten Sensorelement (11).

6. Vorrichtung (1) nach einem der vorhergehenden Ansprüche, wobei das erste Sensorelement (11), das Ionisations-basierte Erfassungselement (19), die geregelten/gesteuerten Strom-Öffnungs-/Schließ-Mittel (90), die elektronischen Verarbeitungsmittel (10) und die Schnittstellenmittel (15) in einem einzelnen Chip einer integralen Vorrichtung umfasst sind.

7. Vorrichtung (1) nach einem der vorhergehenden Ansprüche, ferner umfassend wenigstens ein zweites miniaturisiertes elektromechanisches Drucksensorelement (12), welches innerhalb eines jeweiligen Gehäuses (13) angeordnet ist, welches dazu geeignet ist, das zweite Sensorelement (12) abzudichten, und dazu eingerichtet ist, einen dritten Druckwert (Pref) zu erfassen, welcher als ein Referenzdruckwert (Pref) wirkt, und wobei jedes aus dem ersten (11) und dem zweiten (12) Sensorelement ein jeweiliges Oszillatioselement des MEMS/NEMS-Typs umfasst, welches dazu eingerichtet ist, mit einer dynamischen Reaktion, welche von dem Druck abhängt, welchem es ausgesetzt ist, oszilliert.

8. Vorrichtung (1) nach einem der vorhergehenden Ansprüche, wobei der lonisationsbereich (20) des Ionisations-basierten Erfassungselements (19) Gaspartikel enthält, deren Druck zu messen ist, und er dazu eingerichtet ist, von Ionisationspartikeln, welche durch die lonisationsquelle (21) erzeugt werden, durchlaufen zu werden, so dass die lonisationspartikel die Gaspartikel ionisieren, wobei entsprechende Ionen erzeugt werden;
und wobei die lonen-Extraktionsmittel (22) dazu eingerichtet sind, eine Vorzugstrajektorie für die erzeugten Ionen zu bestimmen, welche durch wenigstens ein lonen-Extraktionsfenster führt, durch welches die Ionen den lonisationsbereich (20) verlassen, wobei die Ionen-Extraktionsmittel (22) wenigstens eine Ionen-Führung und/oder Röntgenstrahlungs-Abschirmungsmittel umfassen, welche dazu eingerichtet sind, den wenigstens einen lonendetektor (23) gegen die Röntgenstrahlen abzuschirmen, um dessen Aussetzung gegenüber Röntgenstrahlen zu reduzieren;
und wobei der wenigstens eine lonendetektor (23) Mikrometer-Abmessungen aufweist, und wobei er jeweils an dem wenigstens einen lonen-Extraktionsfenster angeordnet ist, um gegen Trajektorien von Röntgenstrahlen abgeschirmt zu sein, welche durch Einschläge der ionisierten Elektronen mit Teilen des lonisationsbereichs (20), welche von dem wenigstens einen lonendetektor (23) verschieden sind, erzeugt werden.

9. Vorrichtung (1) nach Anspruch 8, wobei die elektronischen Verarbeitungsmittel (10) einen Speicher umfassen, welcher dazu eingerichtet ist, Charakterisierungsdaten zu speichern, welche das Referenz-Sensorelement (12) bei dem Referenzdruck (P_{ref}) charakterisieren, wobei die Verarbeitungsmittel (10) ferner mit dem zweiten Sensorelement (12) verbunden sind, um das elektrische Referenzsignal (Sref) zu empfangen,
und wobei die elektronischen Verarbeitungsmittel (10) dazu eingerichtet sind, das erste Sensorelement (11), das Ionisations-Erfassungselement (19) und das Referenz-Sensorelement (12) auf Grundlage des elektrischen Referenzsignals (S_{ref}) und der gespeicherten Charakterisierungsdaten zu kalibrieren,
und wobei die elektronischen Verarbeitungsmittel (10) ferner dazu eingerichtet sind, die Daten, welche von dem zweiten Referenz-Sensorelement (12) empfangen werden, zu verarbeiten und auf Grundlage der empfangenen Daten das Folgende auszuführen:
- eine Diagnose-Prozedur des Ionisations-Erfassungselements (19), um mögliche Leistungsabfall-Phänomene zu identifizieren, welchen das Ionisations-Erfassungselement (19) ausgesetzt ist, und
- eine Diagnose-Prozedur des ersten Sensorelements (11), um mögliche Hysterese-Phänomene und/oder Mängel und/oder mögliche thermische und/oder mechanische Abweichungen zu identifizieren, welchen das erste Sensorelement (11) ausgesetzt ist,
und wobei die elektronischen Verarbeitungsmittel (10) dazu eingerichtet sind, in dem Fall, dass die Diagnose-Prozedur ein negatives Ergebnis liefert, das Folgende auszuführen:
- eine Einstellung und/oder Kompensation und/oder Optimierungsprozedur des ersten Sensorelements (11), um die identifizierten Hysterese-Phänomene und/oder Mängel und/oder Abweichungen auf Grundlage der Ergebnisse der Diagnose-Prozedur zu korrigieren;
- eine Einstellung und/oder Kompensation und/oder Optimierungsprozedur an dem Ionisations-Erfassungselement (19) um Leistungsabfall-Phänomene zu korrigieren und/oder zu kompensieren, welche auf Grundlage der Ergebnisse der Diagnose-Prozedur identifiziert worden sind.

10. Vorrichtung (1) nach einem der vorhergehenden Ansprüche, welche dazu eingerichtet ist, Druckwerte zu erfassen, welche im Bereich von 10⁻¹³ mbar und 10⁻⁴ mbar liegen, wobei der erste Unterbereich von Drücken Drücke zwischen 10⁻⁴ mbar und 10⁴ mbar umfasst, welche mittels des ersten elektromechanischen miniaturisierten Sensorelements (11) erfassbar sind, und der zweite Unterbereich von Drücken Drücke zwischen 10⁻¹³ mbar und 10⁻⁴ mbar umfasst, welche mittels des Ionisations-basierten Erfassungselements (19) erfassbar sind.

11. Vorrichtung (1) nach einem der vorhergehenden Ansprüche, wobei das Ionisations-basierte Erfassungselement (19) wenigstens ein selektives lonen-Filterelement umfasst, welches dazu eingerichtet ist, den wenigstens einen lonendetektor (23) gegen all die Ionen mit Ausnahme eines jeweiligen ausgewählten Ions abzuschirmen, so dass der wenigstens eine lonendetektor (23) den partiellen Druck relativ zu dem ausgewählten Ion misst,
und wobei das Filterelement ein einstellbares Filterelement ist, um in Reihe Ionen von verschiedenen Typen an einem gleichen lonendetektor (23) auszuwählen und zu senden, so dass der lonendetektor (23) in Reihe den partiellen Druck und/oder die Konzentration der verschiedenen ausgewählten Ionen misst,
und wobei das Ionisations-Erfassungselement (19) eine Mehrzahl von zusätzlichen lonendetektoren (23) umfasst, um eine jeweilige Mehrzahl von Ionen zu erfassen, wobei die Mehrzahl von zusätzlichen lonendetektoren (23) mit einer jeweiligen Mehrzahl der selektiven lonen-Filterelemente gekoppelt ist, wobei jedes der selektiven Ionen-Filterelemente dazu eingerichtet ist, den jeweiligen lonendetektor (23) gegen all die Ionen mit Ausnahme eines jeweiligen ausgewählten Ions abzuschirmen, so dass die Vorrichtung (1) sowohl als ein Messgerät eines totalen Drucks als auch als ein Messgerät eines partiellen Drucks relativ zu jeder der Mehrzahl der ausgewählten Ionen wirkt.

12. Vorrichtung (1) nach Anspruch 11, wobei:
- falls das Ventil (91) der geregelten/gesteuerten Strom-Öffnungs-/Schließ-Mittel (90) offen ist, das erste Sensorelement (11) und das Ionisations-basierte Erfassungselement (19) zusammenwirken, um Druckmessungen bereitzustellen, und das Ionisations-Erfassungselement (19) Messungen von Gasanalysen oder Restgasanalysen durchführt, falls es in Zuständen von geringem Umgebungsdruck vorliegt;
- falls hohe Umgebungsdruck-Zustände vorliegen, das Ventil (91) der geregelten/gesteuerten Strom-Öffnungs-/Schließ-Mittel (90) geschlossen ist, und die Nanoporen der Schicht von Nanoporen (92) offen sind, wobei das erste Sensorelement (11) Druckmessungen durchführt und das Ionisations-basierte Erfassungselement (19) Messungen einer Gasanalyse oder Restgasanalyse an einem Gemisch von Niederdruck-Gasen mit der gleichen Gaskonzentration wie das Gemisch von Gasen, welches an dem ersten Sensorelement (11) vorliegt, durchführt.

13. Verfahren zum Messen eines Drucks und einer Konzentration von Gasen über einen sehr breiten Bereich von Drücken durch eine miniaturisierte Vorrichtung (1), wobei das Verfahren die Schritte umfasst:
- automatisches Erfassen eines operativen Druckmessbereichs durch elektronische Mittel (10) der Vorrichtung (1) auf Grundlage eines sequenziellen Einschaltens eines ersten Sensorelements (11) der Vorrichtung (1), welches dazu eingerichtet ist, Drücke in einem ersten Unterbereich zu messen, und eines Ionisations-basierten Erfassungselements (19) der Vorrichtung (1), welches dazu eingerichtet ist, Drücke in einem zweiten Unterbereich zu messen;
- falls der erfasste operative Unterbereich der erste Unterbereich ist, Erfassen eines ersten Druckwerts (P₁) und Erzeugen eines ersten elektrischen Signals (S₁), welches den ersten Druckwert (P₁) darstellt, durch das erste Sensorelement (11);
- falls der erfasste operative Unterbereich der zweite Unterbereich ist, Erfassen eines zweiten Druckwerts (P₂) und Erzeugen eines zweiten elektrischen Signals (S₂), welches den zweiten Druckwert (P₂) darstellt, durch das Ionisations-Erfassungselement (19);
- Bestimmen durch die elektronischen Verarbeitungsmittel (10) eines gemessenen Druckwerts (P) auf Grundlage des ersten (S₁) oder des zweiten elektrischen Signals (S₂);
- Bereitstellen des gemessenen Druckwerts (P) als Ausgabe durch Schnittstellenmittel (15) der Vorrichtung (1);
- Regeln/Steuern durch die elektronischen Verarbeitungsmittel (10) mittels der geregelten/gesteuerten Strom-Öffnungs-/Schließ-Mittel (90) der Vorrichtung (1) einer fluidischen Kommunikation zwischen dem lonisations-Erfassungselement (19) und einer Umgebung, in welcher das erste Sensorelement (11) angeordnet ist, um dem Ionisations-Erfassungselement (19) zu erlauben, Gaskonzentrationen zu messen, was auch immer der operative Druckbereich ist, in welchem das Verfahren ausgeführt wird;
wobei das erste Sensorelement (11), das Ionisations-basierte Erfassungselement (19), die geregelten/gesteuerten Strom-Öffnungs-/Schließ-Mittel (90), die elektronischen Verarbeitungsmittel (10) und die Schnittstellenmittel (15) in einer einzelnen integralen Vorrichtung umfasst sind;
wobei das Verfahren ferner die Schritte umfasst:
- Messen von partiellen Gasdrücken durch das Ionisations-basierte Erfassungselement (19) unter makrofluidischen Kommunikationszuständen zwischen dem ersten Sensorelement (11) und dem Ionisations-basierten Erfassungselement (19), falls das Verfahren in dem zweiten Unterbereich von Drücken ausgeführt wird;
- oder Messen von partiellen Gasdrücken durch das Ionisations-basierte Erfassungselement (19) unter mikrofluidischen Kommunikationszuständen in einem molekularen System zwischen dem ersten Sensorelement (11) und dem Ionisations-basierten Erfassungselement (19), falls das Verfahren in dem ersten Unterbereich von Drücken ausgeführt wird.

## Revendications

1. Dispositif miniaturisé (1) pour mesures de pression sur une gamme très large et pour mesures de concentration de gaz, comprenant :
- au moins un premier élément de capteur miniaturisé électromécanique (11) configuré pour détecter une première valeur de pression (P₁), dans une première sous-gamme de pressions mesurables, et générer un premier signal électrique (S₁) représentant la première valeur de pression (P₁) ;
- un élément de détection basé sur une ionisation (19), configuré pour détecter une deuxième valeur de pression (P₂), dans une deuxième sous-gamme de pressions mesurables, et comprenant au moins une source d'ionisation (21), une région d'ionisation (20), des moyens d'extraction d'ions (22), et au moins un détecteur d'ions (23), configuré pour détecter des ions et générer un deuxième signal électrique (S₂) dépendant de la quantité d'ions détectés et représentant la deuxième valeur de pression (P₂) ;
- des moyens d'ouverture/fermeture d'écoulement commandés (90), configurés pour commander une communication fluidique entre l'élément de détection basé sur une ionisation (19) et un environnement dans lequel le premier élément de capteur (11) est situé ;
- des moyens de traitement électronique (10), reliés de manière fonctionnelle audit premier élément de capteur (11) et à l'élément de détection basé sur une ionisation (19), et configurés pour déterminer une valeur de pression mesurée (P) sur la base desdits premier (S₁) et deuxième (S₂) signaux électriques détectés ; les moyens de traitement électronique (10) étant reliés en outre de manière fonctionnelle aux moyens d'ouverture/fermeture d'écoulement commandés (90) et configurés en outre pour commander leur état ;
- des moyens d'interface (15), reliés de manière fonctionnelle auxdits moyens de traitement électronique (10) et configurés pour fournir en sortie ladite valeur de pression mesurée (P),
dans lequel :
- lesdits premier élément de capteur (11), élément de détection basé sur une ionisation (19), moyens d'ouverture/fermeture d'écoulement commandés (90), moyens de traitement électronique (10) et moyens d'interface (15) sont compris dans un dispositif intégré unique ;
- les moyens d'ouverture/fermeture d'écoulement commandés (90) sont configurés pour prendre, de manière commandée : un état fermé, dans lequel ils scellent et isolent l'élément de détection basé sur une ionisation (19) par rapport à l'environnement auquel le premier élément de capteur (11) est exposé ; un état d'ouverture micro-fluidique, dans lequel ils inhibent une communication macro-fluidique, tout en permettant une communication micro-fluidique entre l'élément de détection basé sur une ionisation (19) et le premier élément de capteur (11) ; un état d'ouverture macro-fluidique, dans lequel ils permettent une communication macro-fluidique entre l'élément de détection basé sur une ionisation (19) et le premier élément de capteur (11), de façon à les exposer à un même état de pression ;
- l'élément de détection basé sur une ionisation (19) est configuré en outre pour mesurer une concentration de gaz, dans un état d'ouverture micro-fluidique des moyens d'ouverture/fermeture d'écoulement commandés (90), en présence d'une pression appartenant à la première sous-gamme, et pour mesurer une concentration de gaz, dans un état d'ouverture macro-fluidique des moyens d'ouverture/fermeture d'écoulement commandés (90), en présence d'une pression appartenant à la deuxième sous-gamme.

2. Dispositif (1) selon la revendication 1, ayant une configuration tridimensionnelle, et dans lequel chacun desdits premier élément de capteur (11), élément de détection basé sur une ionisation (19) et moyens d'ouverture/fermeture d'écoulement commandés (90) s'étend le long de deux directions, les moyens d'ouverture/fermeture d'écoulement commandés (90) étant configurés pour commander une communication fluidique entre l'élément de détection basé sur une ionisation (19) et le premier élément de capteur (11) ;
et dans lequel le premier élément de capteur (11), l'élément de détection basé sur une ionisation (19) et les moyens d'ouverture/fermeture d'écoulement commandés (90) sont superposés le long de la troisième direction perpendiculaire aux deux premières, de sorte que, en considérant la troisième direction, les moyens d'ouverture/fermeture d'écoulement commandés (90) sont interposés entre le premier élément de capteur (11) et l'élément de détection d'ionisation (19).

3. Dispositif (1) selon l'une des revendications précédentes, comprenant en outre un élément de pompage miniaturisé (93), configuré pour pomper des gaz de l'élément de détection basé sur une ionisation (19), de façon à maintenir, s'il est allumé sous la commande des moyens de traitement (10), un gradient de pression entre le premier élément de capteur (11) et l'élément de détection basé sur une ionisation (19).

4. Dispositif (1) selon les revendications 1 et 3, dans lequel les moyens d'ouverture/fermeture d'écoulement commandés (90) comprennent :
- au moins une soupape (91), configurée pour prendre un état d'ouverture, dans lequel elle permet une communication macro-fluidique entre le premier élément de capteur (11) et l'élément de détection basé sur une ionisation (19), de sorte qu'ils sont dans les mêmes conditions de pression si l'élément de pompage miniaturisé (93) n'est pas allumé, et un état fermé, dans lequel ladite communication macro-fluidique n'est pas autorisée ;
- une couche de communication micro-fluidique (92), comprenant des nano-pores, convenant pour être ouvertes ou fermées, de manière commandée, adaptée pour laisser passer ou non des micro-écoulements respectifs de gaz, ladite couche de communication micro-fluidique (92) étant configurée pour mettre en communication micro-fluidique, de manière sélective et commandée, le premier élément de capteur (11) et l'élément de détection d'ionisation (19), si la soupape (91) est dans un état fermé, et, si l'élément de pompage miniaturisé (93) est allumé, de façon à rendre la concentration de gaz uniforme, entre le premier élément de capteur (11) et l'élément de détection basé sur une ionisation (19), tout en maintenant une pression différente l'un de l'autre.

5. Dispositif (1) selon l'une quelconque des revendications précédentes, dans lequel la gamme de pressions mesurables est divisée en deux sous-gammes de mesure, et dans lequel les moyens de traitement électronique (10) sont configurés pour générer la valeur de pression mesurée (P) coïncidant avec la première (P₁) ou, si la soupape est dans des états d'ouverture, avec la deuxième (P₂) valeur de pression détectée dépendant du fait que la pression à mesurer appartient à l'une ou à l'autre des sous-gammes de mesure,
et dans lequel les moyens de traitement électronique (10) sont configurés pour détecter automatiquement la sous-gamme de mesure, sur la base d'un allumage séquentiel du dispositif, en commençant par le premier élément de capteur (11).

6. Dispositif (1) selon l'une quelconque des revendications précédentes, dans lequel lesdits premier élément de capteur (11), élément de détection basé sur une ionisation (19), moyens d'ouverture/fermeture d'écoulement commandés (90), moyens de traitement électronique (10) et moyens d'interface (15) sont compris dans une seule puce du dispositif intégré.

7. Dispositif (1) selon l'une des revendications précédentes, comprenant en outre au moins un deuxième élément de capteur de pression électromécanique miniaturisé (12), agencé à l'intérieur d'un boîtier respectif (13), convenant pour sceller le deuxième élément de capteur (12), et configuré pour détecter une troisième valeur de pression (P_{ref}), agissant en tant que valeur de pression de référence (P_{ref}), et dans lequel chacun desdits premier (11) et deuxième (12) éléments de capteur comprend un élément oscillant respectif du type MEMS/NEMS, configuré pour osciller avec une réponse dynamique qui dépend de la pression à laquelle il est soumis.

8. Dispositif (1) selon l'une quelconque des revendications précédentes, dans lequel la région d'ionisation (20) de l'élément de détection basé sur une ionisation (19) contient des particules de gaz dont la pression doit être mesurée, et elle est agencée de façon à être traversée par des particules d'ionisation générées par la source d'ionisation (21), de sorte que les particules d'ionisation ionisent les particules de gaz, générant des ions respectifs ;
et dans lequel les moyens d'extraction d'ions (22) sont configurés pour déterminer une trajectoire préférentielle pour les ions générés, traversant au moins une fenêtre d'extraction d'ions, à travers laquelle les ions quittent la région d'ionisation (20), lesdits moyens d'extraction d'ions (22) comprenant au moins un guide d'ions et/ou un moyen de protection contre les rayons X, configuré pour protéger l'au moins un détecteur d'ions (23) contre lesdits rayons X, de façon à réduire son exposition aux rayons X ;
et dans lequel l'au moins un détecteur d'ions (23) a des dimensions micrométriques, et il est agencé respectivement au niveau de ladite au moins une fenêtre d'extraction d'ions, de façon à être protégé contre des trajectoires de rayons X générées par des impacts des électrons ionisants avec des parties de la région d'ionisation (20) autres que l'au moins un détecteur d'ions (23).

9. Dispositif (1) selon la revendication 8, dans lequel les moyens de traitement électronique (10) comprennent une mémoire, configurée pour stocker des données de caractérisation caractérisant l'élément de capteur de référence (12) à la pression de référence (P_{ref}), lesdits moyens de traitement (10) étant reliés en outre audit deuxième élément de capteur (12) pour recevoir le signal électrique de référence (S_{ref}),
et dans lequel les moyens de traitement électronique (10) sont configurés pour calibrer le premier élément de capteur (11), l'élément de détection d'ionisation (19) et l'élément de capteur de référence (12) sur la base du signal électrique de référence (S_{ref}) et des données de caractérisations stockées,
et dans lequel les moyens de traitement électronique (10) sont configurés en outre pour traiter les données reçues dudit deuxième élément de capteur de référence (12), et pour effectuer, sur la base desdites données reçues :
- une procédure de diagnostic de l'élément de détection d'ionisation (19), de façon à identifier de possibles phénomènes de dégradation de performance auxquels l'élément de détection d'ionisation (19) est soumis, et
- une procédure de diagnostic du premier élément de capteur (11), de façon à identifier de possibles phénomènes d'hystérèse et/ou imperfections et/ou de possibles dérives thermiques et/ou mécaniques auxquels le premier élément de capteur (11) est soumis,
et dans lequel les moyens de traitement électronique (10) sont configurés pour effectuer, dans le cas où la procédure de diagnostic donne un résultat négatif :
- une procédure d'ajustement et/ou de compensation et/ou d'optimisation du premier élément de capteur (11) pour corriger et/ou compenser des phénomènes d'hystérèse identifiés et/ou des imperfections et/ou des dérives, sur la base des résultats de ladite procédure de diagnostic ;
- une procédure d'ajustement et/ou de compensation et/ou d'optimisation sur l'élément de détection d'ionisation (19) pour corriger et/ou compenser des phénomènes de dégradation de performance, qui sont identifiés sur la base des résultats de ladite procédure de diagnostic.

10. Dispositif (1) selon l'une quelconque des revendications précédentes, configuré pour détecter des valeurs de pression comprises entre 10⁻¹³ mbar et 10⁻⁴ mbar, dans lequel la première sous-gamme de pressions comprend des pressions entre 10⁻⁴ mbar et 10⁴ mbar, détectables au moyen du premier élément de capteur miniaturisé électromécanique (11), et la deuxième sous-gamme de pressions comprend des pressions entre 10⁻¹³ mbar et 10⁻⁴ mbar, détectables au moyen de l'élément de détection basé sur une ionisation (19).

11. Dispositif (1) selon l'une quelconque des revendications précédentes, dans lequel l'élément de détection basé sur une ionisation (19) comprend au moins un élément de filtrage sélectif d'ions, configuré pour protéger l'au moins un détecteur d'ions (23) contre tous les ions à l'exception d'un ion sélectionné respectif, de sorte que l'au moins un détecteur d'ions (23) mesure la pression partielle par rapport audit ion sélectionné,
et dans lequel l'élément de filtrage est un élément de filtrage réglable pour sélectionner et envoyer en séquence des ions de différents types sur un même détecteur d'ions (23), de sorte que ledit détecteur d'ions (23) mesure en séquence la pression partielle et/ou concentration des différents ions sélectionnés,
et dans lequel l'élément de détection d'ionisation (19) comprend une pluralité de détecteurs d'ions supplémentaires (23) pour détecter une pluralité d'ions respective, la pluralité de détecteurs d'ions supplémentaires (23) étant couplée à une pluralité respective desdits éléments de filtrage sélectifs d'ions, chacun desdits éléments de filtration sélectifs d'ions étant configuré pour protéger le détecteur d'ions respectif (23) contre tous les ions à l'exception d'un ion sélectionné respectif, de sorte que le dispositif (1) agit à la fois en tant que dispositif de mesure de pression totale, et en tant que dispositif de mesure de pression partielle par rapport à chacun de la pluralité desdits ions sélectionnés.

12. Dispositif (1) selon la revendication 11, dans lequel :
- si la soupape (91) des moyens d'ouverture/fermeture d'écoulement commandés (90) est ouverte, le premier élément de capteur (11) et l'élément de détection basé sur une ionisation (19) coopèrent pour fournir des mesures de pression, et l'élément de détection d'ionisation (19) effectue des mesures d'analyse de gaz ou d'analyse des résidus de gaz si dans des états de faible pression environnementale ;
- si dans des états de pression environnementale élevée, la soupape (91) des moyens d'ouverture/fermeture d'écoulement commandés (90) est fermée, et les nano-pores de la couche de nano-pores (92) sont ouvertes, le premier élément de capteur (11) effectue des mesures de pression, et l'élément de détection basé sur une ionisation (19) effectue des mesures d'analyse de gaz ou d'analyse des résidus de gaz sur un mélange de gaz à faible pression ayant les mêmes concentrations de gaz que le mélange de gaz présent au niveau du premier élément de capteur (11).

13. Procédé de mesure de pression et de concentration de gaz, sur une gamme très large de pressions, par un dispositif miniaturisé (1), le procédé comprenant les étapes de :
- détection automatique d'une gamme de mesure de pression fonctionnelle, par des moyens de traitement électronique (10) du dispositif (1), sur la base d'un allumage séquentiel d'un premier élément de capteur (11) du dispositif (1), configuré pour mesurer des pressions dans une première sous-gamme, et un élément de détection basé sur une ionisation (19) du dispositif (1), configuré pour mesurer des pressions dans une deuxième sous-gamme ;
- si la sous-gamme fonctionnelle détectée est la première sous-gamme, détection d'une première valeur de pression (P₁) et génération d'un premier signal électrique (S₁) représentant la première valeur de pression (P₁), par le premier élément de capteur (11) ;
- si la sous-gamme fonctionnelle détectée est la deuxième sous-gamme, détection d'une deuxième valeur de pression (P₂) et génération d'un deuxième signal électrique (S₂) représentant la deuxième valeur de pression (P₂), par l'élément de détection d'ionisation (19) :
- détermination, par les moyens de traitement électronique (10), d'une valeur de pression mesurée (P) sur la base dudit premier (S₁) ou deuxième signal électrique (S₂) ;
- fourniture en sortie de la valeur de pression mesurée (P), par les moyens d'interface (15) du dispositif (1) ;
- commande, par les moyens de traitement électronique (10), à l'aide des moyens d'ouverture/fermeture d'écoulement commandés (90) du dispositif (1), d'une communication fluidique entre l'élément de détection d'ionisation (19) et un environnement dans lequel le premier élément de capteur (11) est situé, pour permettre à l'élément de détection d'ionisation (19) de mesurer des concentrations de gaz, quelle que soit la gamme de pressions fonctionnelle dans laquelle le procédé fonctionne ;
lesdits premier élément de capteur (11), élément de détection basé sur une ionisation (19), moyens d'ouverture/fermeture d'écoulement commandés (90), moyens de traitement électronique (10) et moyens d'interface (15) étant compris dans un dispositif intégré unique ;
le procédé comprenant en outre l'étape de :
- mesure de pressions de gaz partielles, par l'élément de détection basé sur une ionisation (19), dans des états de communication macro-fluidiques entre le premier élément de capteur (11) et l'élément de détection basé sur une ionisation (19), si le procédé fonctionne dans la deuxième sous-gamme de pressions ;
- ou, mesure de pressions de gaz partielles, par l'élément de détection basé sur une ionisation (19), dans des états de communication micro-fluidiques en régime moléculaire entre le premier élément de capteur (11) et l'élément de détection basé sur une ionisation (19), si le procédé fonctionne dans la première sous-gamme de pressions.
